# EUROPEAN PATENT APPLICATION

(11) **EP 4 797 774 A1**
(43) Date of publication of application: **26.08.2026**
(21) Application number: 24888031.2
(22) Date of filing: 07.11.2024
(51) Int. Cl.: H04W 24/02

(54) **COMMUNICATION METHOD AND COMMUNICATION APPARATUS**

(30) Priority: 08.11.2023 CN 202311490785
(71) Applicant: Huawei Technologies Co., Ltd., Shenzhen, Guangdong 518129 (CN)
(72) Inventor: XING, Weijun, Shenzhen, Guangdong 518129 (CN); YAO, Qi, Shenzhen, Guangdong 518129 (CN); XUE, Yifei, Shenzhen, Guangdong 518129 (CN); WU, Shaoyun, Shenzhen, Guangdong 518129 (CN)
(74) Representative: Körber, Martin Hans
(86) International application number: PCT/CN2024/130372
(87) International publication number: WO 2025/098420

(57) **Abstract**

A communication method and a communication apparatus are provided. The method includes: A session management network element sends configuration information to a user plane network element. The user plane network element establishes, based on the configuration information, a first connection with a terminal device for a first service. The first connection is used to transmit signaling and/or data associated with the first service. In addition, the session management network element further configures a first execution rule for the first service for the user plane network element. In this way, the terminal device can initiate, on demand, a service request for the first service to the user plane network element through the first connection, thereby enabling flexible and lightweight network deployment and management.

## Description

This application claims priority to Chinese Patent Application No. 202311490785.0, filed with the China National Intellectual Property Administration on November 8, 2023 and entitled "COMMUNICATION METHOD AND COMMUNICATION APPARATUS", which is incorporated herein by reference in its entirety.

### TECHNICAL FIELD

Embodiments of this application relate to the field of communication technologies, and more specifically, to a communication method and a communication apparatus.

### BACKGROUND

A mobile network system establishes transmission channels for users, enabling fast and reliable transmission of data packets for various services between users and a data network (data network, DN), thereby providing users with ubiquitous access services. With the development of communication technologies, a mobile network not only provides connection services, but also may further provide additional functions such as computing, sensing, and data processing. One implementation is to introduce a service function (service function, SF) into the core network user plane to support providing the foregoing additional functions for the users, so as to meet their service requirements. For example, a session management function (session management function, SMF) orchestrates a user-plane path, and selects a user plane function (user plane function, UPF) that is either integrated with an SF or can be connected to an SF to provide a session pipeline connection for the users, so that the SMF can schedule another service on the user plane. However, this implementation requires pre-deployment of network functions, hindering flexible and lightweight network deployment and management.

### SUMMARY

This application provides a communication method and a communication apparatus to improve flexibility in network deployment and management.

According to a first aspect, a communication method is provided. The method may be performed by a session management network element, or may be performed by a chip or a circuit of the session management network element. This is not limited in this application. For ease of description, the following provides description by using an example in which the method is performed by the session management network element.

The method includes: receiving a first request message from a terminal device, where the first request message is used to request to establish a first connection for a first service, and the first connection is used to transmit signaling and/or data associated with the first service; and sending configuration information to a user plane network element, where the configuration information is used to establish the first connection between the terminal device and the user plane network element, the configuration information includes a first execution rule for the first service, the first execution rule for the first service is used for executing the first service, and the user plane network element supports providing the first service for the terminal device.

For example, the first service may be any one or more of the following services:
(1) The first service may provide a single network service. For example, the first service may be a business or a service provided by a 5th generation (5th generation, 5G) network, for example, a protocol data unit (protocol data unit, PDU) session establishment/modification service, a registration service, or a positioning service; or may be a newly added network service in the future, for example, a sensing service, a computing service, a data service, an artificial intelligence (artificial intelligence, AI) service, a cloud terminal service, a data compression service, an AI model training service, or a virtual user creation service. For example, the first service may be used as a data processing service for a user, including providing services such as compression, decompression, caching, acceleration processing, encryption/decryption, encoding/decoding, format conversion, load balancing, or firewall for user data (which may be uplink data and/or downlink data).
(2) The first service may provide a sub-network service through a combination of a plurality of network functions/service functions (Functions), and provide a dedicated network service for a user through interaction between a plurality of function-based functions. For example, a user-dedicated logical network (for example, a network slice), user space, or a non-public network is formed by using a plurality of network functions.
(3) The first service may form a service chain (NF Service Chain) through orchestration based on execution logic of a plurality of network functions/service functions (Functions). For example, an AI-related service chain such as an AI task and model training is processed through interaction between a plurality of functions, or a virtual private network (Virtual Private Network, VPN), a firewall, and a load balancing function are connected in series in a specific sequence to form a data center service chain.

It should be understood that different service combinations may correspond to different network services. The first service may be distinguished by using a standardized identifier. For example, the single network service may be identified by a network service identifier (Service ID); the network function (or network application) may be identified by a network function identifier (network function identifier, NF ID) or an application identifier (application identifier, APP ID); and the sub-network service may be identified by a network-level identifier such as network slice information (such as single-network slice selection assistance information (Single-Network Slice Selection Assistance Information, S-NSSAI)), a network identifier (Network ID), or a closed access group identifier (Closed Access Group identifier, CAG ID). For the foregoing service chain, an identifier such as a network service chain identifier (Service Chain ID) may be used.

According to the foregoing solution, a first service function is deployed on a user plane based on the configuration information. In other words, the first service is integrated into a user plane function, to improve network function deployment flexibility. In addition, the user plane network element supporting the first service is selected to establish the first connection, so that the user plane network element subsequently starts the first service, thereby reducing unnecessary session changes and reducing signaling overheads.

In some implementations of the first aspect, the method further includes: sending a first response message to the terminal device, where the first response message indicates an establishment result of the first connection.

In some implementations of the first aspect, the first response message includes a second execution rule for the first service, and the second execution rule for the first service is determined based on policy information and/or subscription information.

Based on the foregoing solution, the terminal device may have a session with the user plane network element according to the second execution rule, so that the terminal device can subsequently initiate a service request of the first service to the user plane network element as required, to meet flexible and convenient network deployment and management.

In some implementations of the first aspect, the configuration information further includes a trigger condition of the first service and/or information about the first service.

Based on the foregoing solution, the user plane network element may flexibly start the first service based on the trigger condition, to reflect flexibility of dynamic deployment of the first service, thereby saving network resources.

In some implementations of the first aspect, the first execution rule includes one or more of the following: a transmission quality of service QoS enforcement rule; a data encryption method; an address mapping rule; a network resource occupied for executing the first service; an application programming interface API of the first service; time information for allowing provision of the first service; location information for allowing provision of the first service; information about an application APP that supports use of the first service; and quality of service for allowing provision of the first service.

In some implementations of the first aspect, before sending the configuration information to the user plane network element, the method further includes: determining the user plane network element based on the obtained policy information and/or subscription information.

Based on the foregoing solution, the user plane network element supporting the first service is selected based on the policy information and/or the subscription information as required, to effectively provide the first service for the terminal device.

In some implementations of the first aspect, the method further includes: sending a second request message to a first network element, where the second request message is used to request the first network element to configure a first parameter for the user plane network element, the first parameter includes address information of a second network element and/or resource information used for executing the first service, the address information of the second network element is used for the user plane network element to establish a connection with the second network element, and the first network element and the second network element support the first service; and receiving a second response message from the first network element, where the second response message indicates a configuration result of the first parameter.

For example, the first network element may be a service control function.

Based on the foregoing solution, by sending the configuration request, the first network element may configure, for the user plane network element, the address information of the first service function and/or the resource information used for executing the first service. Therefore, when the terminal device subsequently initiates the service request of the first service, the user plane network element or the first service function can provide the first service for the terminal device in time, thereby ensuring user experience.

In some implementations of the first aspect, the method further includes: sending a first query message to the first network element, where the first query message is used to obtain the resource information used for executing the first service, and the first network element supports the first service; receiving, from the first network element, the resource information used for executing the first service or information about a database, where the database stores the resource information used for executing the first service; and sending, to the user plane network element, the resource information used for executing the first service or the information about the database.

Based on the foregoing solution, the session management network element may obtain, from the first network element by using the first query message, the resource information used for executing the first service, and then configure, for the user plane network element, the resource information used for executing the first service, so that the user plane network element can use the resource information to execute the first service.

In some implementations of the first aspect, the method further includes: receiving a third request message, where the third request message is used by an application network element to request to deploy a second service for the terminal device at a first location; and sending configuration update information to the user plane network element and/or the terminal device, where the configuration update information includes resource information used for deploying the second service.

Optionally, the first service and the second service may be a same service, or may be different services. This is not limited in this application.

Based on the foregoing solution, the application network element is supported in requesting to deploy the second service for the terminal device at the first location, to improve network function deployment flexibility, thereby better responding to a user request and providing better user experience.

In some implementations of the first aspect, the third request message includes the resource information used for deploying the second service.

In some implementations of the first aspect, the method further includes: sending a second query message to the first network element, where the second query message is used to obtain the resource information used for deploying the second service, and the first network element supports the first service; and receiving, from the first network element, the resource information used for deploying the second service or information about a database, where the database stores the resource information used for deploying the second service.

In some implementations of the first aspect, the method further includes: receiving a service request message from the terminal device, where the service request message is used to request to execute the first service; sending activation indication information to the user plane network element or the first network element, where the activation indication information indicates to activate the first service, and the first network element supports the first service; and sending a service response message to the terminal device, where the service response message indicates an execution result of the first service.

Based on the foregoing solution, the session management network element may trigger, based on the service request of the first service of the terminal device, to request the user plane network element or the first network element to activate the first service, to provide the first service for the terminal device, thereby better responding to the user request and providing better user experience.

According to a second aspect, a communication method is provided. The method may be performed by a user plane network element, or may be performed by a chip or a circuit of the user plane network element. This is not limited in this application. For ease of description, the following provides description by using an example in which the method is performed by the user plane network element.

The method includes: receiving configuration information from a session management network element, where the configuration information is used to establish a first connection between a terminal device and the user plane network element, and the first connection is used to transmit signaling and/or data associated with a first service; and establishing, based on the configuration information, the first connection with the terminal device for the first service.

It should be understood that, that the user plane network element supports the first service may be understood as follows: A service function for executing the first service is integrated into the user plane network element, that is, the first service is deployed in an integrated manner by using a user plane. Alternatively, the user plane network element may be connected to the service function for executing the first service. In other words, the user plane network element in this application may provide the first service for the terminal device. This implementation can improve network function deployment flexibility.

In some implementations of the second aspect, the configuration information includes a first execution rule for the first service, and the method further includes: executing the first service according to the first execution rule for the first service; and sending an execution result of the first service to the terminal device through the first connection.

In some implementations of the second aspect, the configuration information further includes a trigger condition of the first service, and executing the first service according to the first execution rule for the first service includes: executing the first service according to the first execution rule for the first service when the trigger condition of the first service is met.

In some implementations of the second aspect, the first execution rule includes one or more of the following: a transmission quality of service QoS enforcement rule; a data encryption method; an address mapping rule; a network resource occupied for executing the first service; an application programming interface API of the first service; time information for allowing provision of the first service; location information for allowing provision of the first service; information about an application APP that supports use of the first service; and quality of service for allowing provision of the first service.

In some implementations of the second aspect, the trigger condition of the first service includes one or more of the following: receiving activation indication information from the session management network element, where the activation indication information is used to activate the first service; or receiving activation indication information from the terminal device through the first connection, where the activation indication information is used to activate the first service; or receiving a service request message from the terminal device through the first connection.

It should be understood that, in this application, activating the first service and executing the first service are associated, and one of the two operations may be selected for execution. For example, after it is determined to activate the first service, execution of the first service is also required. For example, if it is determined to execute the first service, it indicates that the first service needs to be activated before the first service is executed. Therefore, an operation of activating the first service may be equivalent to an operation of executing the first service. In other words, in this application, activating the first service and executing the first service may be mutually replaced or both exist.

It should be noted that the user plane network element in this application does not specifically limit an occasion for activating the first service or executing the first service. For example, the user plane network element may immediately activate and execute the first service when the trigger condition of the first service is met; or the user plane network element may first activate the first service, and then execute the first service when the trigger condition of the first service is met.

In some implementations of the second aspect, the method further includes: obtaining address information of a second network element, where the second network element supports providing the first service for the terminal device; and establishing a second connection with the second network element based on the address information of the second network element.

In this application, the user plane network element and the second network element (for example, a function-as-a-service (Function-as-a-Service, FaaS) function that may be referred to as an FaaS service function, where the first service may be referred to as an FaaS service in this case) may be independently deployed, or may be deployed in an integrated manner. The second network element supports providing the first service. In other words, the FaaS service function supports providing the FaaS service. When the user plane network element and the second network element are independently deployed, the user plane network element and the second network element may exchange information through the second connection. To be specific, the second network element may send the first execution rule for the first service to the second network element, the second network element executes the first service, and the user plane network element feeds back an execution result to the terminal device by using a base station. When the user plane network element and the second network element are deployed in an integrated manner, for example, the second network element is deployed inside the user plane network element, the user plane network element may execute the first service according to the first execution rule for the first service. This is not limited in this application.

In some implementations of the second aspect, obtaining the address information of the second network element includes: receiving the address information of the second network element from a first network element or the session management network element, where the first network element supports the first service.

In some implementations of the second aspect, obtaining the address information of the second network element includes: before receiving the address information of the second network element from the first network element, sending a third query message to the first network element, where the third query message is used to obtain the address information of the second network element.

In some implementations of the second aspect, the method further includes: receiving, from the first network element or the session management network element, resource information used for executing the first service or information about a database; and querying the database to obtain the resource information.

In some implementations of the second aspect, before receiving, from the first network element, the resource information used for executing the first service or the information about the database, the method further includes: sending a fourth query message to the first network element, where the fourth query message is used to obtain the resource information used for executing the first service.

In some implementations of the second aspect, the method further includes: receiving configuration update information from the session management network element, where the configuration update information includes resource information used for deploying a second service, and the second service is a service that an application network element requests to deploy for the terminal device at a first location; and updating, based on the configuration update information, the resource information used for deploying the second service.

For beneficial effect of the second aspect and some implementations of the second aspect, correspondingly refer to the related descriptions of the first aspect. Details are not described herein again.

According to a third aspect, a communication method is provided. The method may be performed by a first network element (for example, a service control function), or may be performed by a chip or a circuit of a first network element. This is not limited in this application. For ease of description, the following provides descriptions by using an example in which the method is performed by the first network element.

The method includes: receiving a second request message from a session management network element, where the second request message is used to request a first network element to configure a first parameter for a user plane network element, the first parameter includes address information of a second network element and/or resource information used for executing a first service, the address information of the second network element is used for the user plane network element to establish a connection with the second network element, and the first network element and the second network element support the first service; sending the first parameter to the user plane network element; and sending a second response message to the session management network element, where the second response message indicates a configuration result of the first parameter.

In some implementations of the third aspect, the method further includes: sending the address information of the second network element to the user plane network element.

Optionally, before the address information of the second network element is sent to the user plane network element, a third query message is received from the user plane network element. The third query message is used to obtain the address information of the second network element.

In some implementations of the third aspect, the method further includes: sending, to the user plane network element and/or the session management network element, resource information used for executing the first service or information about a database, where the database stores the resource information used for executing the first service.

Optionally, before the resource information used for executing the first service or the information about the database is sent to the user plane network element and/or the session management network element, a second query message is received from the session management network element, and/or a fourth query message is received from the user plane network element. The second query message and/or the fourth query message are/is used to obtain the resource information used for executing the first service.

For beneficial effect of the third aspect and some implementations of the third aspect, correspondingly refer to related descriptions of the first aspect. Details are not described herein again.

According to a fourth aspect, a communication method is provided. The method may be performed by a terminal device (for example, UE), or may be performed by a chip or a circuit of a terminal device. This is not limited in this application. For ease of description, the following provides description by using an example in which the method is performed by the terminal device.

The method includes: sending a first request message to a session management network element, where the first request message is used to request to establish a first connection for a first service, the first connection is used to transmit signaling and/or data associated with the first service, the first connection is a connection between a terminal device and a user plane network element, and the user plane network element supports the first service; and receiving a first response message from the session management network element, where the first response message indicates an establishment result of the first connection.

In some implementations of the fourth aspect, the method further includes: sending a trigger condition of the first service to the user plane network element through the first connection.

In some implementations of the fourth aspect, the method further includes: sending a service request message to the user plane network element, where the service request message is used to request to execute the first service, and the service request message includes an identifier of the first service; and receiving a service response message from the user plane network element, where the service response message includes an execution result of the first service.

In some implementations of the fourth aspect, the method further includes: receiving configuration update information from the session management network element, where the configuration update information includes resource information used for deploying a second service, and the second service is a service that an application network element requests to deploy for the terminal device at a first location; and updating, based on the configuration update information, the resource information used for deploying the second service.

For beneficial effect of the fourth aspect and some implementations of the fourth aspect, correspondingly refer to related descriptions of the first aspect. Details are not described herein again.

According to a fifth aspect, a communication method is provided. The method may be performed by a session management network element, a user plane network element, and a terminal device; or may be performed by a session management network element, a user plane network element, and a chip or a circuit of a terminal device. This is not limited in this application. For ease of description, the following provides description by using an example in which the method is performed by the session management network element, the user plane network element, and the terminal device.

The method includes: The session management network element sends configuration information to the user plane network element. The user plane network element receives the configuration information from the session management network element. The configuration information is used to establish a first connection between the terminal device and the user plane network element. The first connection is used to transmit signaling and/or data associated with a first service. The configuration information includes a first execution rule for the first service. The first execution rule is used for executing the first service. The user plane network element supports providing the first service for the terminal device. The user plane network element establishes, based on the configuration information, the first connection with the terminal device for the first service.

In some implementations of the fifth aspect, before the session management network element sends the configuration information to the user plane network element, the method further includes: The terminal device sends a first request message to the session management network element. The session management network element receives the first request message from the terminal device. The first request message is used to request to establish the first connection for the first service.

In some implementations of the fifth aspect, the method further includes: The session management network element sends a first response message to the terminal device, and the terminal device receives the first response message from the session management network element. The first response message indicates an establishment result of the first connection. The first response message includes a second execution rule for the first service. The second execution rule for the first service is determined based on policy information and/or subscription information.

In some implementations of the fifth aspect, the configuration information further includes a trigger condition of the first service and/or information about the first service.

In some implementations of the fifth aspect, the method further includes: The session management network element sends a second request message to the first network element. The first network element receives the second request message from the session management network element. The second request message is used to request the first network element to configure a first parameter for the user plane network element. The first parameter includes address information of a second network element and/or resource information used for executing a first service. The address information of the second network element is used for the user plane network element to establish a connection with the second network element. The first network element and the second network element support the first service. The first network element sends the first parameter to the user plane network element. The first network element sends a second response message to the session management network element. The session management network element receives the second response message from the first network element. The second response message indicates a configuration result of the first parameter.

In some implementations of the fifth aspect, the method further includes: The session management network element sends a first query message to the first network element. The first network element receives the first query message from the session management network element. The first query message is used to obtain resource information used for executing the first service. The first network element sends, to the session management network element, the resource information used for executing the first service or information about a database. The first network element supports the first service. The session management network element receives, from the first network element, the resource information used for executing the first service or the information about the database. The session management network element sends, to the user plane network element, the resource information used for executing the first service or the information about the database. The user plane network element receives, from the session management network element, the resource information used for executing the first service or the information about the database. The user plane network element queries the database to obtain the resource information used for executing the first service.

In some implementations of the fifth aspect, before the session management network element sends the configuration information to the user plane network element, the method further includes: The session management network element determines the user plane network element based on the obtained policy information and/or subscription information.

In some implementations of the fifth aspect, the method further includes: A third network element sends a third request message to the session management network element. The session management network element receives the third request message from the third network element. The third request message is used by an application network element to request to deploy a second service for the terminal device at a first location. The session management network element sends configuration update information to the user plane network element and/or the terminal device. The user plane network element and/or the terminal device receive/receives the configuration update information from the session management network element. The configuration update information includes resource information used for deploying the second service. The user plane network element and/or the terminal device update/updates, based on the configuration update information, the resource information used for deploying the second service.

In some implementations of the fifth aspect, the third request message includes the resource information used for deploying the second service.

In some implementations of the fifth aspect, the method further includes: The session management network element sends a second query message to the first network element. The first network element receives the second query message from the session management network element. The second query message is used to obtain the resource information used for deploying the second service. The first network element supports the first service. The first network element sends, to the session management network element, the resource information used for deploying the second service or information about a database. The session management network element receives, from the first network element, the resource information used for deploying the second service or the information about the database. The database stores the resource information used for deploying the second service.

In some implementations of the fifth aspect, the method further includes: The terminal device sends a service request message to the session management network element. The session management network element receives the service request message from the terminal device. The service request message is used to request to execute the first service. The session management network element sends activation indication information to the user plane network element or the first network element. The user plane network element or the first network element receives the activation indication information from the session management network element. The first network element supports the first service. The user plane network element or the first network element activates the first service based on the activation indication information.

In some implementations of the fifth aspect, the method further includes: The user plane network element executes the first service according to the first execution rule for the first service. The user plane network element sends an execution result of the first service to the terminal device through the first connection.

In some implementations of the fifth aspect, the configuration information further includes a trigger condition of the first service, and executing the first service according to the first execution rule includes: The user plane network element executes the first service according to the first execution rule when the trigger condition of the first service is met.

For beneficial effect of the fifth aspect and some implementations of the fifth aspect, correspondingly refer to related descriptions of the first aspect. Details are not described herein again.

According to a sixth aspect, a communication apparatus is provided. The communication apparatus may be used in the session management network element in the first aspect, and may include modules or units that are in one-to-one correspondence with the methods/operations/steps/actions described in the first aspect. The modules or units may be implemented by a hardware circuit, software, or a combination of a hardware circuit and software.

In some implementations of the sixth aspect, the apparatus includes: a transceiver unit, configured to receive a first request message from a terminal device. The first request message is used to request to establish a first connection for a first service. The first connection is used to transmit signaling and/or data associated with the first service. The transceiver unit is further configured to send configuration information to a user plane network element. The configuration information is used to establish a first connection between the terminal device and the user plane network element. The configuration information includes a first execution rule for the first service. The first execution rule for the first service is used for executing the first service. The user plane network element supports providing the first service for the terminal device. The transceiver unit is further configured to send a first response message to the terminal device. The first response message indicates an establishment result of the first connection.

The transceiver unit may perform receiving and sending processing in the first aspect and the possible implementations of the first aspect. The apparatus further includes a processing unit that may perform processing other than receiving and sending processing in the first aspect.

According to a seventh aspect, a communication apparatus is provided. The communication apparatus may be used in the user plane network element in the second aspect, and may include modules or units that are in one-to-one correspondence with the methods/operations/steps/actions described in the second aspect. The modules or units may be implemented by a hardware circuit, software, or a combination of a hardware circuit and software.

In some implementations of the seventh aspect, the apparatus includes: a transceiver unit, configured to receive configuration information from a session management network element, where the configuration information is used to establish a first connection between a terminal device and the user plane network element, and the first connection is used to transmit signaling and/or data associated with a first service; and a processing unit, configured to establish, based on the configuration information, the first connection with the terminal device for the first service.

The transceiver unit may perform receiving and sending processing in the second aspect and the possible implementations of the second aspect. The processing unit may perform processing other than receiving and sending processing in the second aspect.

According to an eighth aspect, a communication apparatus is provided. The communication apparatus may be used in the first network element in the third aspect, and may include modules or units that are in one-to-one correspondence with the methods/operations/steps/actions described in the third aspect. The modules or units may be implemented by a hardware circuit, software, or a combination of a hardware circuit and software.

In some implementations of the eighth aspect, the apparatus includes: a transceiver unit, configured to receive a first request message from a session management network element. The first request message is used to request a first network element to configure a first parameter for a user plane network element. The first parameter includes address information of a second network element and/or resource information used for executing a first service. The address information of the second network element is used for the user plane network element to establish a connection with the second network element. The first network element and the second network element support the first service. The transceiver unit is further configured to: send the first parameter to the user plane network element; and send a first response message to the session management network element, where the first response message indicates a configuration result of the first parameter.

The transceiver unit may perform receiving and sending processing in the third aspect and the possible implementations of the third aspect. The apparatus further includes a processing unit. The processing unit may perform processing other than receiving and sending processing in the third aspect.

According to a ninth aspect, a communication apparatus is provided. The communication apparatus may be used in the terminal device in the fourth aspect, and may include modules or units that are in one-to-one correspondence with the methods/operations/steps/actions described in the fourth aspect. The modules or units may be implemented by a hardware circuit, software, or a combination of a hardware circuit and software.

In some implementations of the ninth aspect, the apparatus includes: a transceiver unit, configured to send a first request message to a session management network element. The first request message is used to request to establish a first connection for a first service. The first connection is used to transmit signaling and/or data associated with the first service. The first connection is a connection between a terminal device and a user plane network element. The user plane network element supports the first service. The transceiver unit is further configured to receive a first response message from the session management network element. The first response message indicates an establishment result of the first connection.

The transceiver unit may perform receiving and sending processing in the fourth aspect and the possible implementations of the fourth aspect. The apparatus further includes a processing unit. The processing unit may perform processing other than receiving and sending processing in the fourth aspect.

According to a tenth aspect, a communication apparatus is provided, including at least one processor. The at least one processor is configured to execute a computer program or instructions, and/or use a logic circuit, so that the communication apparatus performs the method in any one of the first aspect to the fifth aspect or any one of the possible implementations of these aspects.

Optionally, the at least one processor is coupled to at least one memory, and the at least one memory stores the computer program or instructions. Optionally, the communication apparatus further includes the at least one memory. Optionally, the at least one processor and the at least one memory are integrated together.

According to an eleventh aspect, a chip is provided, including a processor and a communication interface. The communication interface is configured to receive to-be-processed information and/or data and send the to-be-processed information and/or data to the processor. The processor is configured to process the to-be-processed information and/or data, so that a communication apparatus in which a chip is installed performs the method in any one of the first aspect to the fifth aspect or any one of the possible implementations of these aspects.

According to a twelfth aspect, a computer-readable storage medium is provided. The computer-readable storage medium stores computer instructions. When the computer instructions are run on a computer, the method in any one of the first aspect to the fifth aspect or any one of the possible implementations of these aspects is implemented.

According to a thirteenth aspect, a computer program product is provided. The computer program product includes computer program code. When the computer program code is run on a computer, the method in any one of the first aspect to the fifth aspect or any one of the possible implementations of these aspects is implemented.

According to a fourteenth aspect, a wireless communication system is provided, including the communication apparatus according to any one or more of the sixth aspect to the eighth aspect.

Optionally, the communication system may further include the communication apparatus in the ninth aspect.

For technical effect of the technical solutions in the sixth aspect to the fourteenth aspect, refer to the description of the corresponding technical effect in the first aspect to the fourth aspect. Details are not described again.

### BRIEF DESCRIPTION OF DRAWINGS

FIG. 1 is a diagram of a network architecture to which an embodiment of this application is applicable;
FIG. 2 is a diagram of an interaction procedure of a communication method 200 according to an embodiment of this application;
FIG. 3 is a diagram of an interaction procedure of a communication method 300 according to an embodiment of this application;
FIG. 4 is a diagram of an interaction procedure of a communication method 400 according to an embodiment of this application;
FIG. 5 is a diagram of an interaction procedure of a communication method 500 according to an embodiment of this application;
FIG. 6 is a diagram of a communication apparatus 1000 according to an embodiment of this application; and
FIG. 7 is a diagram of a communication apparatus 2000 according to an embodiment of this application.

### DESCRIPTION OF EMBODIMENTS

The following describes technical solutions of this application with reference to accompanying drawings.

The technical solutions provided in this application may be applied to various communication systems, for example, a 4th generation (4th generation, 4G) communication system, such as a long term evolution (long term evolution, LTE) communication system, a 5G communication system, such as 5G new radio (new radio, NR), a 5G core network (5G Core, 5GC), or various communication systems evolved after 5G, such as a 6th generation (6th generation, 6G) communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), and internet-of-things (internet-of-things, IoT) communication systems, or other communication systems.

In a communication system, a part operated by an operator may be referred to as a public land mobile network (public land mobile network, PLMN), which may also be referred to as an operator network or the like. The PLMN is a network established and operated for the purpose of providing a land mobile communication service for the public. The PLMN is mainly a public network that a mobile network operator (mobile network operator, MNO) provides a mobile broadband access service for users. The PLMN described in embodiments of this application may be specifically a network that meets a 3GPP standard requirement, which is briefly referred to as a 3GPP network. The 3GPP network usually includes but is not limited to a 5G mobile communication network, a 4G mobile communication network, and another communication system that is evolved after 5G, such as a 6G mobile communication network.

For ease of description, the PLMN or the 5G network is used as an example for description in embodiments of this application.

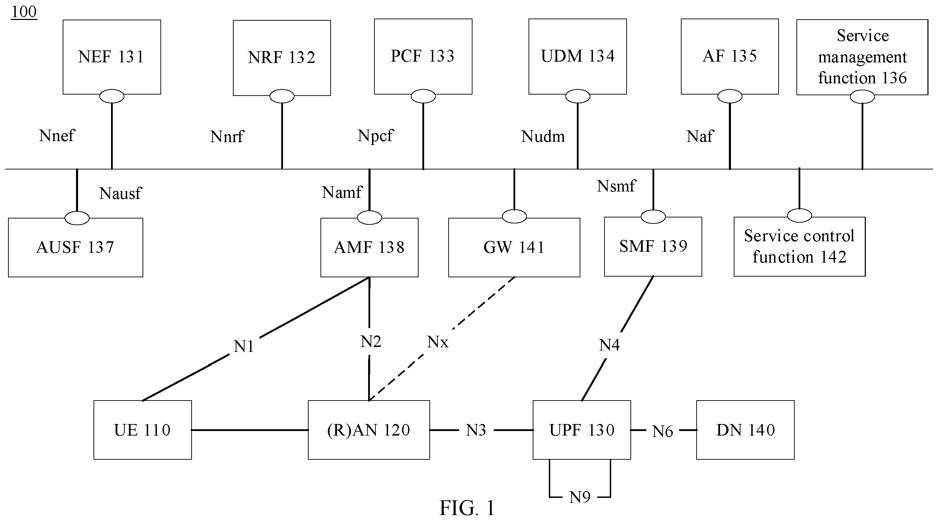

FIG. 1 is a diagram of a network architecture 100 to which an embodiment of this application is applicable. A 5G network architecture of a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes functions of network elements of each part.

The terminal device part may include UE 110. The UE 110 in this application is a device having wireless sending and receiving functions, and may communicate with one or more core network (core network, CN) devices by using an access network device (or may be referred to as an access device) in the (radio) access network (R)AN 120. The UE 110 may also be referred to as user equipment (user equipment, UE), an access terminal, a terminal, a subscriber unit, a subscriber station, a mobile console, a mobile station (mobile station, MS), a mobile terminal (mobile terminal, MT), a remote station, a remote terminal, a mobile device, a user terminal, a user agent, a user apparatus, or the like. The terminal device 110 may alternatively be a device configured to provide voice and/or data connectivity for a user, or may be an internet-of-things device. Alternatively, the UE 110 includes a handheld device having a wireless communication function, a computing device, another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. Currently, the UE 110 may be a mobile phone, a tablet computer, a notebook computer, a palmtop computer, a mobile internet device (mobile internet device, MID), a wearable device (for example, a smart watch, a smart band, a pedometer, smart glasses, or the like), a vehicle-mounted device (for example, a car, a bicycle, an electric vehicle, an airplane, a ship, a train, a high-speed train, or the like), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, an electricity meter, or the like), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The UE 110 may alternatively be a vehicle apparatus, for example, an entire vehicle apparatus, a vehicle-mounted module, a vehicle-mounted chip, an on board unit (on board unit, OBU), or an internet of vehicles telematics box (telematics box, T-BOX). The UE 110 may alternatively be another device having a terminal function. For example, the UE 110 may alternatively be a device that functions as a terminal in D2D communication. A type or a category of the terminal device is not limited in embodiments of this application. The UE 110 may be deployed on land, including an indoor or outdoor device, or a handheld or vehicle-mounted device, may be deployed on a water surface (for example, on a ship), or may be deployed in the air (for example, on an airplane, a balloon, or a satellite).

The (R)AN 120 may include one or more access network elements or access network devices (which may also be referred to as a network device). In other words, the network device is a node in the (R)AN 120, and may also be referred to as a RAN node (or device). An interface between the access network device and the terminal device may be a Uu interface (or referred to as an air interface, that is, a message exchanged between the access network device and the terminal device may be referred to as an air interface message). Certainly, in future communication, names of these interfaces may remain unchanged, or may be replaced with other names. This is not limited in this application. The (R)AN 120 is a device that provides a wireless communication function for the UE 110, and may connect the terminal device to a node or a device in a wireless network. The network architecture 100 may include one or more (R)ANs 120. The plurality of (R)ANs 120 may be nodes of a same type, or may be nodes of different types. The (R)AN 120 may be considered as a sub-network of the operator network, and is an implementation system between a service node in the operator network and the UE 110. For example, the UE 110 may be connected to the service node of the operator network via the (R)AN 120, to obtain a service provided by the service node.

In a possible scenario, the (R)AN 120 includes but is not limited to: a next generation node base station (next generation node base station, gNB) in a 5G system, an evolved nodeB (evolved NodeB, eNodeB) in long term evolution (long term evolution, LTE), a radio network controller (radio network controller, RNC), a nodeB (nodeB, NB), a base station controller (base station controller, BSC), a base transceiver station (base transceiver station, BTS), a home base station (for example, a home evolved nodeB, or a home nodeB (HNB)), a baseband unit (base band unit, BBU), a transmitting and receiving point (transmitting and receiving point, TRP), a transmitting point (transmitting point, TP), a pico base station device, a mobile switching center, a next-generation base station in a 6G mobile communication system, a base station in a future mobile communication system, a satellite, or an access point (access point, AP) in a Wi-Fi system, an integrated access and backhaul (integrated access and backhaul, IAB) node, and a network device in a mobile switching center non-terrestrial communication network (non-terrestrial network, NTN) communication system. The (R)AN 120 may be deployed on a high-altitude platform or a satellite. In this case, the satellite may support functions of the (R)AN 120. In addition, the (R)AN 120 may also be deployed on land, for example, outdoors; or may be deployed on water, for example, on a ship. The (R)AN 120 may be a macro base station, a micro base station or an indoor base station, a relay node or a donor node, or a radio controller in a CRAN scenario. The (R)AN 120 may alternatively be a device that functions as a base station in device-to-device (device-to-device, D2D) communication, internet-of-vehicles communication, uncrewed aerial vehicle communication, or machine communication. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of (R)ANs 120 collaborate to assist the terminal in implementing radio access, and different (R)ANs 120 separately implement a part of functions of the base station. For example, the (R)AN 120 may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the (R)AN 120 may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The CN part may include but is not limited to the following network functions (network functions, NFs): a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, an application function (application function, AF) 135, an authentication server function (authentication server function, AUSF) 137, an access and mobility management function (access and mobility management function, AMF) 138, and a session management function (session management function, SMF) 139.

A data network DN 140 may also be referred to as a packet data network (packet data network, PDN), and is usually a network located outside the operator network, for example, a third-party network.

The following further briefly describes functions of the NFs included in the CN.
1. The UPF 130 is a user plane function provided by an operator, and is a user plane function for communication between the operator network and the DN 140. The UPF network function 130 includes user plane-related functions such as data packet routing and transmission, data packet inspection, traffic usage reporting, quality of service (quality of service, QoS) handling, uplink data packet detection, and downlink data packet storage.
2. The NEF 131 is a control plane function provided by the operator, mainly enables a third party to use a service provided by the network, and supports exposure of capabilities, events, and analytics by the network, secure provision of information from an external application to the PLMN, translation of internal-external information of the PLMN, and the like.
3. The NRF 132 is a control plane function provided by the operator, and may be configured to maintain real-time information of a network function and a service in the network.
4. The PCF 133 is a control plane function provided by the operator, mainly supports provision of a unified policy framework to govern network behavior and provision of policy rules for control plane network functions, and is responsible for accessing user subscription information relevant for policy decisions. For example, the PCF 133 may be divided into two PCFs having different functions, which are respectively a UE-PCF and an AMF-PCF.
5. The UDM 134 is a control plane function provided by the operator, and is responsible for storing information such as a subscriber permanent identifier (subscriber permanent identifier, SUPI), a generic public subscriber identifier (generic public subscriber identifier, GPSI), and a credential (credential) of a subscriber in the operator network. The SUPI is first encrypted during transmission, and an encrypted SUPI is referred to as a subscription concealed identifier (subscription concealed identifier, SUCI). The information stored in the UDM network function 134 may be used for authentication and authorization for accessing the operator network by the terminal device 110.
   It should be understood that the UDM (or the UDR) may be considered as a database (Database, DB), and is configured to store related data of a FaaS.
6. The AF 135 is a control plane function provided by the operator, and mainly interacts with other NFs in the PLMN to provide corresponding services such as provision of visited network selection information for roaming UE, traffic routing guidance, and access to the NEF 131.
7. The AUSF 137 is a control plane function provided by the operator, and is usually used for primary authentication, that is, authentication between the terminal device 110 (a subscriber) and the operator network.
8. The AMF 138 is a control plane network function provided by the operator network, and is responsible for access control and mobility management when the terminal device 110 accesses the operator network, for example, including functions such as mobility status management, allocation of a temporary user identifier, and user authentication and authorization.
9. The SMF 139 is a control plane network function provided by the operator network, is responsible for managing a protocol data unit (protocol data unit, PDU) session (including session establishment, modification, and release) of the terminal device 110, and is for selection and reselection of a user plane function, internet protocol (internet protocol, IP) address allocation of the terminal device, quality of service (quality of service, QoS) control, and the like. The PDU session is a channel for transmitting a PDU, and the terminal device and the DN 140 transmit the PDU to each other through the PDU session. The SMF 139 is responsible for establishment, maintenance, deletion, and the like of the PDU session. The SMF 139 includes session-related functions such as session management (for example, session establishment, modification, and release, including tunnel maintenance between the user plane function UPF 130 and the (R)AN 120), selection and control of the UPF 130, service and session continuity (service and session continuity, SSC) mode selection, and roaming.

It may be understood that the foregoing network elements or NFs may be physical entities in a hardware device, software instances running on dedicated hardware, or virtualized functions instantiated on a sharing platform (for example, a cloud platform). In short, an NF may be implemented by hardware or software. In addition, there may be one or more pieces of hardware (or software) for implementing all functions of an NF.

It should be understood that the AMF, the SMF, the UPF, the NEF, the AUSF, the NRF, the PCF, and the UDM shown in FIG. 1 may be understood as network elements configured to implement different functions in a core network. These network elements may be combined into a network slice as required, and may be independent devices, or may be integrated into a same device to implement different functions. Specific forms of the network elements are not limited in this application.

It should be further understood that the foregoing names are defined merely for ease of distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

It should be further understood that Nnef, Nnrf, Npcf, Nudm, Nausf, Namf, Nsmf, Naf, N1, N2, N3, N4, N6, and N9 in FIG. 1 are interface sequence numbers. For example, for meanings of the interface sequence numbers, refer to meanings defined in the 3GPP standard protocol. The meanings of the interface sequence numbers are not limited in this application. In addition, interface names between the network functions in FIG. 1 are merely examples. In a specific implementation, an interface name of a system architecture may be alternatively another name. This is not limited in this application.

A mobile network system establishes a transmission channel for a user, so that data packets of various services can be quickly and reliably transmitted between the user and a DN, to provide ubiquitous access services for the user. With development of communication technologies, a mobile network not only provides connection services, but also may further provide additional functions such as computing, sensing, and data processing. However, a network function in an existing solution needs to be pre-deployed, and costs are high and efficiency is low. Therefore, flexible and convenient network deployment and management cannot be met.

To resolve the foregoing technical problem, in this application, a service control function is added based on a current network architecture. Specifically, as shown in FIG. 1, the following briefly describes the service control function.
1. The service control function 136 is a control plane network function provided by the operator network, and is mainly responsible for life cycle management of the network service. In this application, the service control function may be implemented as an independent network function or integrated into another network function in the 5G architecture. In other words, the service control function 136 may be jointly deployed with the SMF 139, or may be implemented as one of functions of the SMF. This is not limited in this application.

It should be noted that, in an implementation, the UPF 130 in FIG. 1 may integrate a function-as-a-service (Function-as-a-Service, FaaS, FaaS service for short). In other words, the UPF 130 may be deployed with a first service function (for example, an FaaS service function) in an integrated manner. In this case, the UPF 130 may flexibly activate or execute a first service (for example, an FaaS service) based on configuration of the service control function 136. The FaaS service may be referred to as serverless computing (Serverless computing, Serverless). Based on a platform as a service (Platform as a Service, PaaS), the FaaS service provides a mini-architecture. The terminal device does not need to deploy, configure, or manage a server service. All server services required for code running are provided by a cloud platform. In another implementation, the UPF 130 in FIG. 1 may alternatively be independently deployed with the first service function (for example, an FaaS service function). For example, the FaaS service function may be an independent network function NF (for example, an independent virtual machine or a container). In this case, the FaaS service function may flexibly activate or execute the first service (for example, the FaaS service) based on configuration of the service control function 136 or a request of the UPF 130.

Based on the foregoing newly added network function NF (or network element), this application provides a communication method and a communication apparatus. A session management network element sends configuration information, to support establishing a first connection that is between a terminal device and a user plane network element and that is used to transmit signaling and/or data associated with a first service, and configure a first execution rule for the first service for the user plane network element, so that the terminal device obtains the first service as required, to meet flexible and convenient network deployment and management.

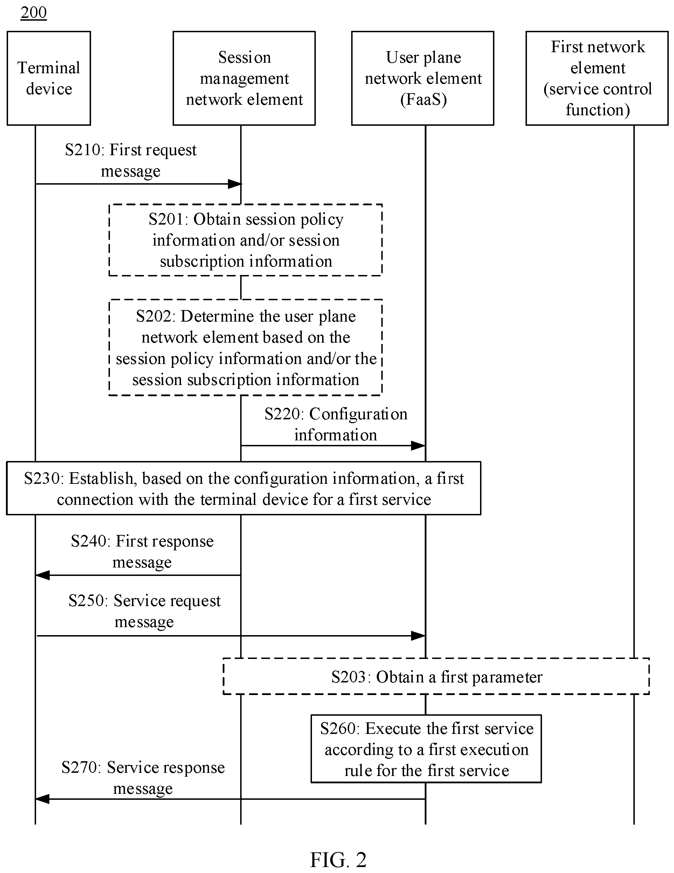

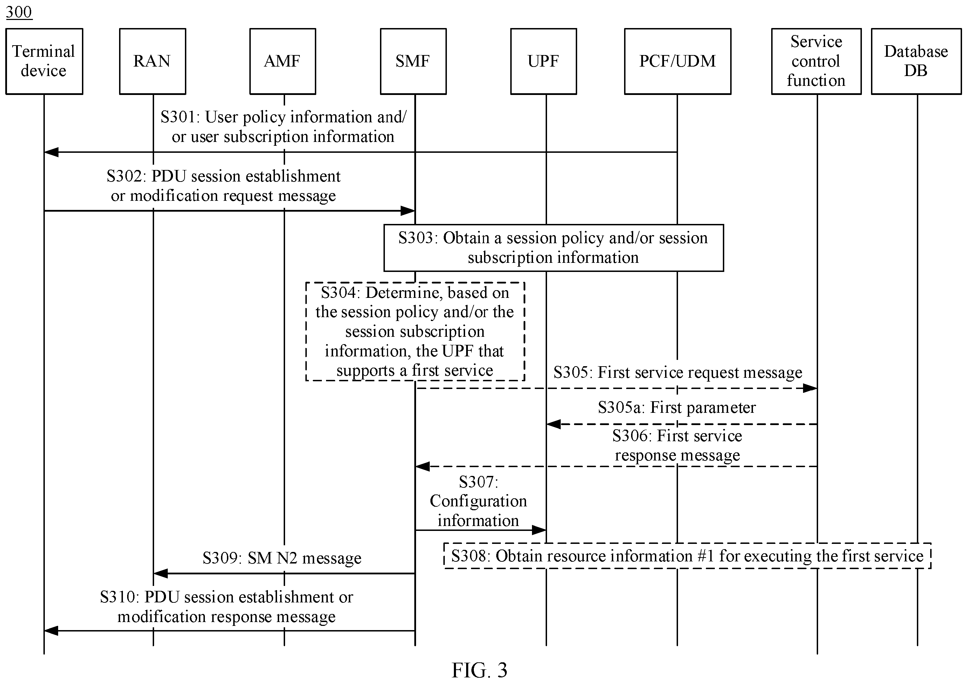

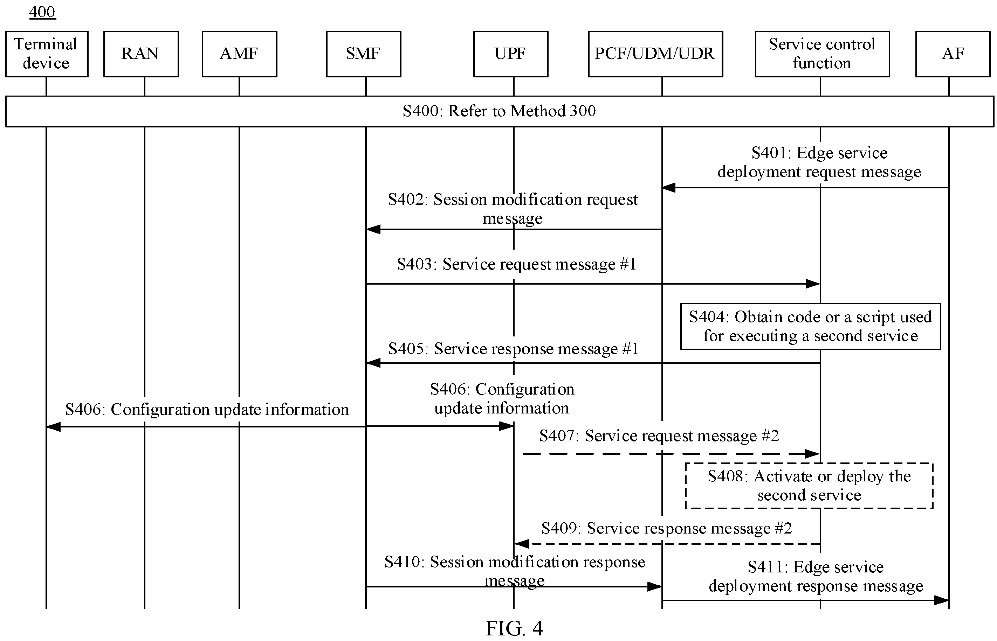

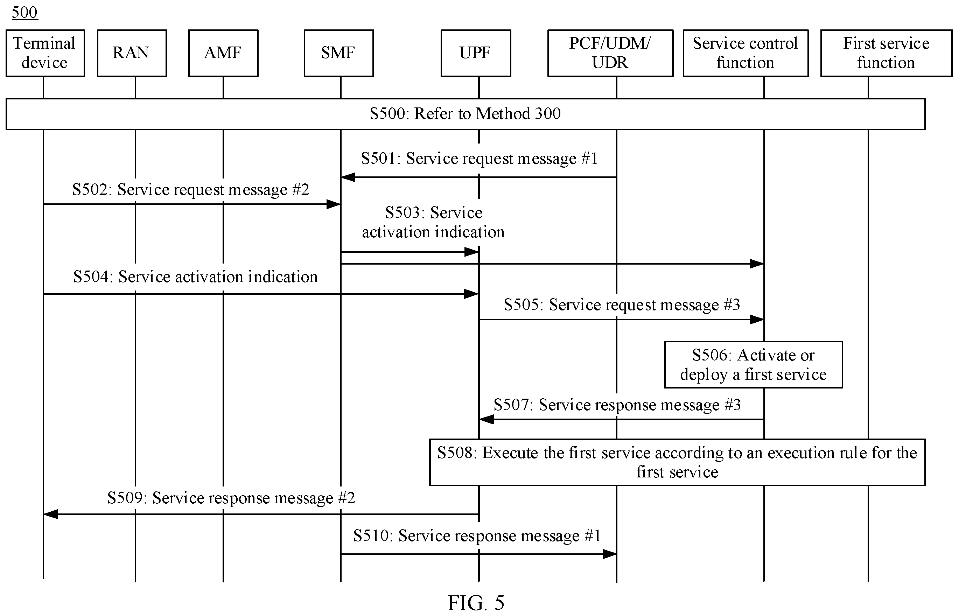

The following describes, in detail with reference to the accompanying drawings, the communication method provided in embodiments of this application. Embodiments provided in this application are applicable to any communication scenario in which a transmit-end device communicates with a receive-end device, for example, may be applied to the communication system shown in FIG. 1. This application provides methods shown in FIG. 2 to FIG. 5 below. It should be understood that method embodiments shown in FIG. 2 to FIG. 5 may be combined with each other, and steps in the method embodiments shown in FIG. 2 to FIG. 5 may be mutually referenced. In embodiments of this application, the method embodiments shown in FIG. 3 to FIG. 5 may be considered as implementations of implementing the method embodiment shown in FIG. 2. FIG. 3 mainly describes establishment of a first connection that is between a terminal device and a user plane network element and that is used for transmitting signaling and/or data associated with a first service, and configuration of a first execution rule for the first service for the user plane network element by a session management network element. FIG. 4 mainly describes a third network element requesting to deploy or configure a second service for a terminal device at a first location. FIG. 5 mainly describes an execution procedure of a first service.

It should be noted that a network service (for example, a first service) in embodiments of this application may be a connection service, a positioning service, a registration service, or a session establishment service; or may be a data compression service, a data buffer service, a format conversion service, an artificial intelligence (artificial intelligence, AI) service, a computing service, a sensing service, or the like. The network service may be replaced with a network function service. For ease of description, in this application, the network service is used as an example for description. Optionally, the network service may be represented by an NF service or a service.

FIG. 2 is a schematic flowchart of a communication method 200 according to an embodiment of this application. As shown in FIG. 2, the method procedure may be performed by a session management network element (for example, the SMF shown in FIG. 1), a user plane network element (for example, the UPF shown in FIG. 1), a first network element (for example, the service control function shown in FIG. 1), and a terminal device (for example, the UE shown in FIG. 1); or may be performed by a module and/or a component (for example, a chip or an integrated circuit) that have/has corresponding functions and that are/is installed in the session management network element, the user plane network element, the first network element, and the terminal device. This is not limited in this application. For ease of description, the following provides description by using the session management network element, the user plane network element, the first network element (for example, the service control function), and the terminal device as execution entities. The method includes the following plurality of steps.

S210: The terminal device sends a first request message to the session management network element. Correspondingly, the session management network element receives the first request message from the terminal device.

The first request message is used to establish a first connection for a first service. The first connection is used to transmit data and/or signaling associated with the first service. The first connection is a connection between the terminal device and the user plane network element. In other words, the terminal device and the user plane network element may exchange information through the first connection. It should be understood that, that the user plane network element supports the first service may be understood as that the user plane network element can provide the first service.

The first request message includes information about the first service.

For example, the information about the first service includes one or more of the following:
(1) A name of the first service or an identifier of the first service (NF Service ID/name).
(2) Address information (such as an IP address and a MAC address) of the first service.
(3) A fully qualified domain name FQDN of the first service.
(4) An application programming interface (Application Programming Interface, API).

Optionally, the first request message further includes an identifier of the terminal device.

In this embodiment of this application, the first service may be any one or more of the following services:
(1) The first service may provide a single network service. For example, the first service may be a service currently provided by a 5G network, such as a PDU session establishment/modification service, a registration service, or a positioning service; or may be a newly added network service in the future, such as a sensing service, a computing service, a data service, an AI service, a cloud terminal service, a data compression service, an AI model training service, or a virtual user creation service. For example, the first service may be used as a data processing service for a user, including providing services such as compression, decompression, caching, acceleration processing, encryption/decryption, encoding/decoding, format conversion, load balancing, or firewall for user data (which may be uplink data and/or downlink data).
(2) The first service may provide a sub-network service through a combination of a plurality of network functions/service functions (Functions), and provide a dedicated network service for a user through interaction between a plurality of function-based functions. For example, a user-dedicated logical network (such as a network slice), user space, or a non-public network is formed by using a plurality of network functions.
(3) The first service may form a service chain (NF Service Chain) through orchestration based on execution logic of a plurality of network functions/service functions (Functions). For example, a plurality of functions interact to process an AI-related service chain such as an AI task or model training, or a virtual private network (Virtual Private Network, VPN), a firewall, and a load balancing function are connected in series in a specific sequence to form a data center service chain.

It should be understood that different service combinations may correspond to different network services. The first service may be distinguished by a standardized identifier. For example, the single network service may be identified by a network service identifier (NF Service ID); the network function (or network application) may be identified by an NF ID or an application identifier (application identifier, APP ID); and the sub-network service may be identified by a network-level identifier such as network slice information (such as single-network slice selection assistance information (Single-Network Slice Selection Assistance Information, S-NSSAI)), a network identifier (Network ID), or a closed access group identifier (Closed Access Group identifier, CAG ID). For the foregoing service chain, an identifier such as a network service chain identifier (NF Service Chain ID) may be used.

It should be noted that specific service content provided by the first service is not limited in this application, and a design solution for information exchange and a service procedure required for implementing the first service is provided. For ease of description and understanding, in this application, the first service is uniformly identified by using the information about the first service, and the information about the first service may include the identifier of the first service. For the foregoing different services, the identifier of the first service may be, for example, a service ID, an NF ID, an APP ID, an S-NSSAI, a network ID, a CAG ID, or a service chain ID.

Optionally, before step S210 is performed, the terminal device may obtain user policy information or subscription information from a network side. For example, the terminal device obtains the user policy information from a PCF, or the user subscription information from a subscription management function (such as a UDM/UDR) or an access management function (such as an AMF). The user policy information or the subscription information includes a service that the terminal device is allowed to use and a corresponding service use method or rule. For example, a service that can be used by the terminal device and that is provided by a network includes information such as a computing service and a data processing service, and corresponding connection information (that is, a session parameter, such as a DNN and/or slice information and a session type).

In a possible implementation, the terminal device may trigger, based on a data processing service requirement of an application layer for an application data packet, a request for the network to establish/modify a session of the data processing service, that is, perform step S210. The data processing service may be embodied as follows: The terminal device requests the network side to accelerate an application layer data packet, for example, using a VPN service to perform processing such as compression and caching on the application layer data packet. In this case, the first request message may be a session establishment/modification request message, for example, a PDU session establishment/modification request (session establishment/modification request) message.

For example, the terminal device may determine, based on the obtained user policy information or subscription information, a session parameter corresponding to the data processing service that the network allows the terminal device to use, and then establish/modify a session. If the terminal device currently has not established a session of the data processing service, the terminal device may send a session establishment request message to the network side (for example, an SMF) based on the user policy information or the subscription information. The session establishment request message carries a session identifier and a session parameter (for example, DNN and/or slice information). If the terminal device currently has established a session of the data processing service, the terminal device may send a session modification request message to a network side (for example, an SMF) based on the user policy information or the subscription information. The session modification request message carries a session identifier.

Optionally, the session establishment/modification request message may further carry one or more of the following: information about an application that requires the network to provide the data processing service (such as an identifier of an application, address information used by an application layer data packet, a fully qualified domain name (full qualified domain name, FQDN)), a processing method or a network service (such as a processing service for an application layer data packet) corresponding to the application, and the like. Optionally, if all application data packets in a session use a same network service, that is, different application data packets do not need to be processed differently, the application information may not be carried.

It should be noted that a quantity of first services requested by the terminal device is not limited in this application. In other words, the first service may be one or more services. For a plurality of first services, for example, a data processing service and a computing service, the session establishment/modification request message includes information about the data processing service and the computing service. In other words, one session corresponds to a plurality of first services.

S220: The session management network element sends configuration information to the user plane network element. Correspondingly, the user plane network element receives the configuration information from the session management network element. The configuration information is used to establish the first connection between the terminal device and the user plane network element and includes a first execution rule for the first service, that is, the first service may be executed according to the first execution rule.

For example, the first execution rule includes one or more of the following:
(1) A transmission quality of service QoS enforcement rule, for example, a transmission resource (such as a transmission bandwidth, a data transmission delay, a minimum or maximum transmission rate, or a packet loss rate) or a transmission path allowed to be used by the first service.
(2) A data encryption method, for example, an encryption algorithm and/or a decryption algorithm used for a data packet transmitted by the terminal device.
(3) An address mapping rule, for example, a mapping relationship between a destination address of a data packet used by the terminal device and an address of a network function that actually provides a service for the terminal device, that is, a mapping relationship between the destination address and the address of the network function.
(4) A network resource occupied for executing the first service, for example, a computational power resource and/or a storage resource used for executing the first service.
(5) An application programming interface API of the first service, for example, the first service needs to be transferred through a specific API.
(6) Time information for allowing provision of the first service, for example, within a time period from t1 to t2 every day.
(7) Location information for allowing provision of the first service, for example, a specific area or network.
(8) Information about an application APP that supports use of the first service, for example, an APP ID or an AF ID.
(9) Quality of service for allowing provision of the first service, for example, a magnitude of computational power, a memory size, algorithm information used, or a processing manner of a calculation result that is allowed to be provided for a computing service, sensing precision and/or a sensing range that is allowed to be provided for a sensing service, and positioning precision that is allowed to be provided for a positioning service, and the like.

It should be understood that when the user plane network element and the first service function are independently deployed, the first execution rule may further include a parameter (10).
(10) Address information of the first service function (for example, a second network element, also referred to as a FaaS service function), such as an IP address, a MAC address, or an FQDN.

Optionally, the configuration information further includes a trigger condition of the first service and/or information about the first service.

For example, the trigger condition of the first service includes one or more of the following:
(1) Flow description information, for example, quintuple information (for example, a source IP address, a source port, a destination IP address, a destination port, and a transport layer protocol of a data flow) and an APP ID, and the like. For example, when the user plane network element receives a data flow that carries a specific IP address, it triggers execution of the first service.
(2) Timer: For example, the user plane network element may start a timer after establishing the first connection with the terminal device, and trigger execution of the first service when the timer expires.
(3) Trigger event: For example, the trigger event may be that a UE moves to a specific location, and/or subscription information or policy information of the UE changes. To be specific, when the trigger event occurs or is about to occur, the user plane network element may trigger execution of the first service. Optionally, the user plane network element may obtain the trigger event from the PCF/UDM/UDR, the UE, or the session management network element.
(4) Activation indication information: When the user plane network element receives the activation indication information, it triggers execution of the first service. For example, the user plane network element receives the activation indication information from the session management network element; or the user plane network element receives the activation indication information from the terminal device through the first connection. The activation indication information indicates to activate the first service.

It should be understood that, in this application, activating the first service and executing the first service are associated, and one of the two operations may be selected for execution. For example, after it is determined to activate the first service, execution of the first service is also required. For example, if it is determined to execute the first service, it indicates that the first service needs to be activated before the first service is executed. Therefore, an operation of activating the first service may be equivalent to an operation of executing the first service. In other words, in this application, activating the first service and executing the first service may be mutually replaced or both exist.

It should be noted that the user plane network element in this application does not specifically limit an occasion for activating the first service or executing the first service. For example, the user plane network element may immediately activate and execute the first service when the trigger condition of the first service is met; or the user plane network element may first activate the first service, and then execute the first service when the trigger condition of the first service is met.

(5) Service request message: For example, execution of the first service is triggered when the user plane network element receives the service request message from the terminal device through the first connection.

For the information about the first service, refer to related descriptions of step S210. Details are not described herein again.

It should be noted that, for different first services, trigger conditions and/or first execution rules, carried in information configured by the session management network element for the user plane network element, of the first services may be different. When the terminal device requests a plurality of first services, the first execution rule may further include an execution sequence or an execution procedure of the plurality of services.

Optionally, the configuration may be locally stored by the session management network element, or may be obtained by the session management network element from the first network element (for example, a service control function). For example, the session management network element sends a fourth request message to the service control, to request to obtain the trigger condition of the first service and/or the execution rule for the first service. The fourth request message may carry one or more of: the information about the first service, an identifier of the terminal device, address information of the terminal device, a session identifier, an identifier of the user plane network element, and address information of the user plane network element. Correspondingly, the service control sends a fourth response message to the session management network element. The fourth response message includes the trigger condition of the first service and/or the execution rule for the first service. Optionally, the service control function may obtain the trigger condition of the first service and/or the execution rule for the first service from the DB.

In an example, before step S220 is performed, the method further includes S201 and S202.

S201: The session management network element obtains session policy information and/or session subscription information.

For example, the session management network element sends a fifth request message, to obtain the session policy information of the terminal device and/or the session subscription information of the terminal device. The fifth request message may carry a user identifier, a session identifier, a session parameter, and the information about the first service (for example, information about a data processing service). Correspondingly, the PCF sends a fifth response message to the session management network element. The fifth response message includes the session policy information, and/or the subscription management function (for example, the UDM/UDR) or the access management function (for example, the AMF) sends a fifth response message to the session management network element. The fifth response message includes the session subscription information.

The session policy information and/or the session subscription information include/includes one or more of the following:
(1) Policy or rule of the first service: includes one or more of the following: a charging policy or rule (such as a charging method, a charging quota, or a charging periodicity) for providing the first service, a life cycle rule of a service (such as a service suspension rule or a release rule), quality of service (such as a transmission bandwidth, a delay, a packet loss, a computational power quota, a storage quota, or service accuracy), quality of service, service content, a geographical range that can be covered by a service, a service time, or a security rule (such as an authentication method, authorization information, and an encryption algorithm).
(2) Trigger condition of the first service: For a specific explanation, refer to related descriptions of step S220.

Further, the session management network element may provide a session establishment/modification service for the terminal device based on the session policy information and/or the session subscription information.

S202: The session management network element determines the user plane network element based on the session policy information and/or the session subscription information.

In other words, the session management network element selects, based on the session policy information and/or the session subscription information, the user plane network element supporting the first service, so that the first connection is established between the terminal device and the user plane network element.

For example, it is assumed that the policy or the rule of the first service in the session policy information and/or the session subscription information includes one or more of the following: service content, a service time, and a geographical range that can be covered by the service. In this case, the session management network element may select the user plane network element supporting the service content; and/or the session management network element may select the user plane network element that can provide a service in the geographical range that can be covered by the service; and/or the session management network element may select a user plane network element that can be connected to a RAN in the geographic range; and/or the session management network element may select a user plane network element supporting providing a service within the service time, and the like.

In this embodiment of this application, there may be the following two types of user plane network elements selected by the session management network element:
(1) The user plane network element supports the first service. In other words, the session management network element selects a user plane network element integrated with the first service function to provide the first service for the terminal device. In other words, the terminal device may exchange information with the session management network element to obtain the first service.
(2) The user plane network element is not integrated with the first service function. In other words, the first service function (for example, the second network element) may be deployed as an independent network function NF or network element (for example, an independent virtual machine or a container). In this case, the session management network element selects a user plane network element that can be connected to the first service function, to provide the first service for the terminal device. In other words, the user plane network element selected by the session management network element may exchange information with the terminal device, or may exchange information with the first service function, so that the terminal device can exchange information with the first service function to obtain the first service.

S230: The user plane network element establishes, based on the configuration information, the first connection with the terminal device for the first service.

For example, the configuration information carries interface information of a RAN side, and the user plane network element may establish a connection to the RAN side based on the interface information. In addition, if the second network element (which may also be referred to as the first service function, for example, the FaaS service function) is independently deployed, the configuration information may further carry interface information of the FaaS service function, and the user plane network element may establish a connection to the FaaS service function based on the interface information.

S240: The session management network element sends a first response message to the terminal device. Correspondingly, the terminal device receives the first response message from the session management network element.

The first response message indicates an establishment result of the first connection, for example, successful establishment success or failed establishment. It should be understood that the technical method in this application is performed based on successful establishment of the first connection.

It should be noted that, if there are a plurality of first services in step S210, the first response message indicates that a session corresponding to one or more first services is successfully established or fails to be established. Optionally, a quantity of sessions corresponding to the first service is not limited in this application. For example, a plurality of first services are in a one-to-one correspondence with a plurality of sessions, that is, a plurality of first services correspond to a plurality of first connections. In this case, each first service corresponds to one session used to transmit signaling and/or data associated with the first service; or a plurality of first services are established for one session, that is, the plurality of first services correspond to one first connection. In this case, the plurality of first services correspond to one session used to transmit signaling and/or data associated with the first service, and different first services may be distinguished by carrying identities of the first services. For example, it is assumed that the first service includes a data processing service and a computing service. The first response message may indicate a session establishment connection success of the data processing service, and/or indicate a session establishment connection failure of the computing service. Optionally, for a computing service for which a session fails to be established, the session management network element may send a failure cause value to the terminal device. For example, the computing service is not authorized by a network, or a current resource of a network cannot meet a transmission requirement of the computing service.

In a possible implementation, the first response message includes a second execution rule for the first service, and optionally, may further include the information about the first service.

Optionally, the second execution rule may be determined based on the session policy information and/or the session subscription information in step S201. The second execution rule for the first service includes a transmission quality of service QoS enforcement rule, for example, a transmission resource (such as a transmission bandwidth, a delay, or a packet loss rate) that is allowed to be used by the first service.

In a possible implementation, if the first request message in step S210 is a session establishment/modification request message, the first response message may be a session establishment/modification response message, to indicate whether a session of the first service is successfully established/modified. Optionally, the session establishment/modification response message may include a PDU session ID.

Optionally, the session management network element sends a session management (session management, SM) N2 message to the RAN. The SM N2 message carries information related to the session, for example, includes QoS configuration information of an air interface and user plane path information (for example, core network tunnel information (CN tunnel information)), so that the RAN can send information from the terminal device to the user plane network element and send information from the user plane network element to the terminal device.

S250: The terminal device sends a service request message to the user plane network element. Correspondingly, the user plane network element receives the service request message from the terminal device.

The service request message is used to obtain the first service, and the service request message includes the identifier of the first service.

Optionally, the service request message may further include the identifier of the terminal device and/or the PDU session ID.

For example, the terminal device sends the service request message to the user plane network element through the first connection. Correspondingly, the user plane network element receives the service request message from the terminal device through the first connection.

Optionally, the terminal device sends the service request message to the user plane network element by using the session management network element. For example, the terminal device sends a service request message #1 to the session management network element, and correspondingly, the session management network element sends a service request message #2 to the user plane network element. The service request message #1 and the service request message #2 are used to request to execute the first service. The service request message #1 and the service request message #2 may be considered as a combination of the service request message in step S250. Optionally, the service request message #1 and the service request message #2 may be the same or different. For example, after receiving the service request message #1, the session management network element may perform necessary format processing to obtain the service request message #2, and send the service request message #2.

S260: The user plane network element executes the first service according to the first execution rule for the first service.

For example, it is assumed that the first service is a data transmission service, the user plane network element may determine, according to the first execution rule for the first service, one or more of the following: for example, the data transmission bandwidth being 20 megahertz (MHz), the maximum transmission rate required for data transmission being 10 megabits per second (Mbit/s or Mbps), the data transmission delay being 10 ms, the packet loss rate being 5%, and the data encryption algorithm being a Zu Chongzhi (ZUC) confidentiality security protection algorithm, and the data transmission path being that the user plane network element may send data to the RAN, the DN, the CN, or the like.

In a possible implementation, before step S260 is performed, the method further includes: The user plane network element obtains the trigger condition of the first service.

For example, the terminal device sends the trigger condition of the first service to the user plane network element through the first connection. Correspondingly, the user plane network element receives the trigger condition of the first service from the terminal device through the first connection.

For another example, the session management network element sends the trigger condition of the first service to the user plane network element. For example, the trigger condition is carried in the configuration information in step S220.

Further, when the trigger condition of the first service is met, the user plane network element executes the first service according to the first rule of the first service. For content and explanations of the trigger condition of the first service, refer to related descriptions of step S220.

In a possible implementation, before step S260 is performed, the method further includes: activating or deploying the first service.

Optionally, when triggering of the first service is met, the user plane network element activates or deploys the first service.

Optionally, when triggering of the first service is met, the user plane network element may send a sixth request message to the first network element (for example, the service control function). The sixth request message is used to request the first network element to activate or deploy the first service. For example, when triggering of the first service is met, the user plane network element may add a token to the sixth request message and send the sixth request message to the first network element, to request the first network element to activate or deploy the first service. Correspondingly, the first network element activates or deploys the first service based on the token. Optionally, the token may be understood as a trigger condition for activating or deploying the first service by the first network element. Optionally, the token may be sent by the first network element to the session management network element after the first network element performs step S1 below, and then the session management network element forwards the token to the user plane network element. For example, the first network element may send a seventh response message to the session management network element by using step S2 below.

In a possible implementation, before step S260 is performed, the method further includes step S203.

S203: The user plane network element obtains a first parameter.

The first parameter includes address information of the second network element and/or resource information #1 used for executing the first service. The second network element supports the first service. It should be noted that when the first parameter includes the address information of the second network element, it may be understood that the user plane network element and the second network element are independently deployed, and the second network element may be the foregoing described first service function or FaaS service function. In this case, the user plane network element needs to send, to the second network element, the resource information #1 used for executing the first service, so that the second network element executes the first service. When the first parameter does not include the address information of the second network element, it may be understood that the user plane network element and the second network element are deployed in an integrated manner. In this case, the user plane network element executes the first service based on the resource information #1.

The resource information #1 used for executing the first service includes one or more of the following:
(1) Execution code, an algorithm, a script, and an image file that are required for executing the first service.
   Optionally, the execution code, the algorithm, the script, and the image file may be obtained from a database DB.
(2) A computational power resource and/or a storage resource required for executing the first service.

The following describes an example of a specific implementation in which the user plane network element obtains the first parameter.

In an implementation 1, the user plane network element obtains the first parameter from the first network element.

Example 1-1: The first network element sends the first parameter to the user plane network element based on a request of the session management network element. Refer to steps S1 to S4 below.

S1: The session management network element sends a second request message to the first network element. Correspondingly, the first network element receives the second request message from the session management network element. The second request message is used to request the first network element to configure the first parameter for the user plane network element.

The second request message includes one or more of the information about the first service, the identifier of the user plane network element, the address information of the user plane network element, the identifier of the terminal device, and an address of the terminal device.

S2: The first network element obtains the first parameter of the second network element.

For example, the first network element may query the database DB to obtain the resource information #1 used for executing the first service, and locally query the first network element to obtain the address information of the second network element.

S3: The first network element sends the second first parameter to the user plane network element. Correspondingly, the user plane network element receives the first parameter from the first network element.

S4: The first network element sends a second response message to the session management network element. Correspondingly, the session management network element receives the second response message from the first network element.

The second response message indicates a configuration result of the first parameter, for example, successful configuration or failed configuration. It should be understood that this implementation is performed based on successful configuration of the first parameter. Optionally, if the first parameter fails to be configured, the second response message may carry a failure cause value. For example, the terminal device is unreachable, the information about the first service changes, or the user plane network element is overloaded.

Optionally, the second response message may carry the first parameter and/or information about a database. It should be understood that the database stores the resource information #1 used for executing the first service.

Example 1-2: The first network element sends the first parameter to the user plane network element based on a request of the user plane network element. Refer to steps S5 to S7 below.

S5: The user plane network element sends a seventh request message (that is, a third query message and/or a fourth query message) to the first network element. Correspondingly, the first network element receives the seventh request message from the user plane network element. The seventh request message is used to obtain the first parameter.

The seventh request message includes one or more of the information about the first service, the identifier of the user plane network element, the address information of the user plane network element, and the identifier of the terminal device.

S6: The first network element obtains the first parameter.

For example, the first network element may query the database DB to obtain the resource information #1 used for executing the first service, and locally query the first network element to obtain the address information of the second network element.

S7: The first network element sends a seventh response message to the user plane network element. The seventh response message carries the first parameter. Correspondingly, the user plane network element receives the first parameter from the first network element.

In an implementation 2, the user plane network element obtains the first parameter from the session management network element.

For example, the first parameter may be dynamically configured (dynamically configured) by the session management network element by using signaling or a message, or may be preconfigured (pre-configured). For example, the first parameter may be implemented by pre-storing, in the user plane network element, corresponding code, a table, or another manner that may indicate the first parameter. An implementation of the first parameter is not limited in this application.

For example, the user plane network element sends an eighth request message to the session management network element. The eighth request message is used to obtain the first parameter. Correspondingly, after receiving the eighth request message from the user plane network element, the session management network element sends an eighth response message to the user plane network element. The eighth response message includes the first parameter and/or information about a database. It should be understood that the database stores the resource information used for executing the first service. Optionally, the session management network element may obtain the first parameter from the first network element, and the first parameter may be carried in the response message #2 in step S208.

Optionally, the first parameter may be carried in the configuration information in step S220, or may be sent to the user plane network element by using another message.

In an implementation 3, the user plane network element obtains the first parameter from the database DB, and/or obtains the address information of the second network element from the first network element or the session management network element.

For example, the user plane network element receives the address information of the second network element and/or information about a database from the session management network element or the first network element, to query the database to obtain the resource information #1 used for executing the first service.

S270: The user plane network element sends a service response message to the terminal device. Correspondingly, the terminal device receives the service response message from the user plane network element.

The service response message indicates an execution result of the first service, for example, successful execution or failed execution. Optionally, if the first service fails to be executed, the service response message may carry a failure cause value. For example, the failure cause value indicates that the terminal device is unreachable, the information about the first service changes, or the user plane network element is overloaded.

In an example, the user plane network element sends the service response message to the terminal device through the first connection. Correspondingly, the terminal device receives the service response message from the user plane network element through the first connection. The service response message includes the execution result of the first service.

In another example, the user plane network element sends the service response message to the terminal device by using the session management network element. For example, the user plane network element sends a service response message #1 to the session management network element, and the session management network element sends a service response message #2 to the terminal device. The service response message #1 and the service response message #2 indicate the execution result of the first service, and the service response message #1 and the service response message #2 may be considered as a combination of the service response message in step S270. Optionally, the service response message #1 and the service response message #2 may be the same or different. For example, after receiving the service response message #1, the session management network element may perform necessary format processing to obtain the service response message #2, and send the service response message #2.

In a possible implementation, in this embodiment of this application, the application function is further allowed to perform edge service deployment. This includes steps S8 to S11 below.

S8: The application function sends a third request message to the session management network element. Correspondingly, the session management network element receives the third request message from the application function.

The third request message is used to request to deploy a second service for the terminal device at a first location. The second service is a service that is requested by an application network element AF to deploy the service for the terminal device at the first location. For example, the second service may be a computing service, a sensing service, a data processing service, or another service. In this embodiment of this application, the first location may be understood as a current access location of the terminal device, or a current location of the terminal device. In other words, the first location indicates a location that supports providing the second service for the terminal device.

For example, the third request message may include one or more of the following information: user information (for example, an identifier or address information of the terminal device), a service requirement (for example, a quality of service requirement of the second service), service code (for example, a resource such as execution code, a mirroring image, an algorithm, or a script for executing the second service), and service data (for example, data information required for executing the second service, an AI model, a computational power resource, a storage resource, and external interface information).

In an example, if a request of the application function relates to a related session of the terminal device, that is, the third request message carries the identifier or the address information of the terminal device, the application function may send the third request message to the session management network element by using the PCF/UDM/UDR. For example, the application function sends a request message #α to the PCF/UDM/UDR, and the PCF/UDM/UDR sends a request message #β to the session management network element. Both the request message #α and the request message #β are used to request to deploy the second service at the first location. The request message #α and the request message #β may be considered as a combination of the third request message. Optionally, the request message #α and the request message #β may be the same or different. For example, after receiving the request message #α, the PCF/UDM/UDR may perform necessary format processing to obtain the request message #β, and send the request message #β.

S9: The session management network element sends configuration update information to the user plane network element and/or the terminal device. Correspondingly, the user plane network element and/or the terminal device receive/receives the configuration update information from the session management network element.

For example, the session management network element sends configuration update information #1 to the user plane network element. The configuration update information #1 includes an execution rule used for executing the second service, and optionally, further includes information about the second service and/or a trigger condition for executing the second service. For specific included content and explanations of the trigger condition for executing the second service and the execution rule for executing the second service, separately refer to related descriptions of the trigger condition for executing the first service and the execution rule for executing the first service.

For example, the session management network element sends configuration update information #2 to the terminal device. The configuration update information #2 includes the execution rule used for executing the second service, for example, includes a transmission quality of service QoS enforcement rule, for example, a transmission resource (such as a transmission bandwidth, a delay, and a packet loss rate) that is allowed to be used by the second service.

S10: The user plane network element updates, based on the configuration update information, the information about the second service, the trigger condition for executing the second service, and the execution rule for executing the second service.

S11: The session management network element sends a third response message to the application function. Correspondingly, the application function receives the third response message from the session management network element.

The third response message includes a deployment result of the second service, for example, successful deployment or failed deployment. It should be understood that this implementation is performed based on successful deployment of the second service. Optionally, if the second service fails to be deployed, the third response message may carry a failure cause value. For example, the terminal device is unreachable, the information about the second service changes, the user plane network element and/or the terminal device do/does not support the second service, or the user plane network element is overloaded.

In a possible implementation, for an edge service deployment solution, the session management network element needs to obtain resource information used for deploying the second service, and send, to the user plane network element, the resource information used for deploying the second service. For example, the resource information may be carried in the configuration information in step S220 and sent to the user plane network element. The resource information used for deploying the second service includes resources such as execution code, a mirroring image, an algorithm, and a script for executing the second service. In other words, steps S12 to S15 below are included.

S12: The session management network element (for example, the service control function) sends a second query request message to the first network element. Correspondingly, the first network element receives the second query request message from the session management network element.

The second query request message is used to obtain the resource information used by the second service. For example, the second query request message may include one or more of the identifier and/or the address information of the terminal device, the session identifier, and the identifier and/or the address information of the user plane network element.

S13: The first network element obtains the resource information used by the second service. For example, the first network element obtains, from the database DB, the resource information used by the second service.

S14: The first network element sends, to the session management network element, the resource information used by the second service and/or information about a database. Correspondingly, the session management network element receives the resource information used by the second service and/or the information about the database. The database stores the resource information used by the second service.

S15: The session management network element sends, to the user plane network element, the resource information used by the second service and/or the information about the database. Correspondingly, the user plane network element receives, from the session management network element, the resource information used by the second service and/or the information about the database. Further, the user plane network element may query the database to obtain the resource information used by the second service.

In this application, the second network element and the user plane network element may be independently deployed, or may be deployed in an integrated manner. For example, the second network element may be an independent network function NF (for example, an independent virtual machine or a container), or may be co-located with the user plane network element. Similarly, the first network element (for example, the service control function) and the session management function may be independently deployed, or may be deployed in an integrated manner. For example, the first network element may be an independent network function NF, or may be co-located with the session management network element. This is not limited in this application. It should be understood that the method shown in FIG. 2 is described by using an example in which the first network element and the session management network element are independently deployed and the second network element and the user plane network element are deployed in an integrated manner. Optionally, if the first network element and the session management network element are co-located, the foregoing steps S1 to S4 may not be performed. If the user plane network element and the second network element are independently deployed, the user plane network element may forward the configuration information in step S220 to the second network element. Alternatively, in steps S250 to 270, the user plane network element may send the service request message to the second network element, and the second network element executes the first service according to the execution rule for the first service and forwards the service response message from the second network element to the terminal device, and the like.

According to the foregoing solution, the session management network element sends the configuration information, to support establishing the first connection that is between the terminal device and the user plane network element and that is used to transmit the signaling and/or the data associated with the first service, and configure the first execution rule for the first service for the user plane network element, so that the terminal device can obtain the first service from the user plane network element through the first connection as required, thereby reflecting flexibility of dynamic deployment of the first service, saving network resources, and meeting flexible and convenient network deployment and management.

FIG. 3 is a schematic flowchart of a communication method 300 according to an embodiment of this application. As shown in FIG. 3, description is provided by using an example in which a session management network element is an SMF, a user plane network element is a UPF, and a first network element is a service control function. A method for activating or dynamically deploying a first service is provided. The method includes a plurality of steps below. It should be understood that the method 300 shown in FIG. 3 may be considered as a specific implementation of the method shown in FIG. 2. Related descriptions in the embodiment shown in FIG. 2 are also applicable to this implementation. FIG. 3 and FIG. 2 may have a same or similar technical means. Content described in the embodiment shown in FIG. 2 is not described in detail again in FIG. 3.

S301: A PCF/UDM sends user policy information and/or user subscription information to a terminal device. Correspondingly, the terminal device receives the user policy information and/or the user subscription information from the PCF/UDM.

For included content and explanations of the user subscription information and/or the user subscription information, and a specific implementation, refer to the related description of step S210 in the method 200.

S302: The terminal device sends a PDU session establishment or modification request message to the SMF. Correspondingly, the SMF receives the PDU session establishment or modification request message from the terminal device.

The PDU session establishment or modification request message is used to request to establish/modify a first connection for a first service. The first connection is used to transmit data and/or signaling associated with the first service between V and the UPF. For included content and explanations of the PDU session establishment or modification request message, and a specific implementation, refer to related descriptions of step S210 in the method 200.

S303: The SMF obtains a session policy and/or session subscription information.

For example, the SMF receives the session policy and/or the session subscription information from the PCF/UDM.

S304: The SMF determines, based on the session policy and/or the session subscription information, a UPF supporting the first service, for example, a UPF (FaaS). The UPF supporting the first service may be understood as follows: The UPF executes the first service, and sends an execution result to the terminal device; or a first service function executes the first service, the UPF may exchange information with a first service function, and the first service function may send an execution result to the terminal device by using the UPF.

For included content and explanations of the session policy and/or the session subscription information in steps S303 and S304, and a specific implementation, refer to the related description of steps S201 and S202 in the method 200.

S305: The SMF sends a first service request message to a service control function. Correspondingly, the service control function receives the first service request message from the SMF. The first service request message is used to request the service control function to configure a first parameter for the UPF.

S305a: The service control function sends the first parameter to the UPF. Correspondingly, the UPF receives the first parameter from the service control.

S306: The service control function sends a first service response message to the SMF. Correspondingly, the SMF receives the first service response message from the service control function. The first service response message indicates a configuration result of the first parameter, for example, successful configuration or failed configuration.

For content and explanations of the first service request message, the first parameter, and the first service response message in the foregoing steps S305 and S306, and a specific implementation, refer to the related descriptions of steps S1 to S4 in the method 200.

S307: The SMF sends configuration information to the UPF. Correspondingly, the UPF receives the configuration information from the SMF.

For content explanations of the configuration information, and a specific implementation, refer to the related descriptions of step S220 in the method 200.

S308: The UPF obtains resource information #1 for executing the first service.

For example, the UPF sends a request message to the service control function, to obtain the resource information #1 for executing the first service. Correspondingly, the service control function may obtain, by querying a database DB, the resource information #1 for executing the first service, and send the resource information #1 to the UPF.

For content and explanations of the resource information #1 for executing the first service, and a specific implementation, refer to the related descriptions of steps S5 to S7 in the method 200.

S309: The SMF sends an SM N2 message to a RAN. Correspondingly, the RAN receives the SM N2 message from the SMF.

S310: The SMF sends a PDU session establishment or modification response message to the terminal device. Correspondingly, the terminal device receives the PDU session establishment or modification response message from the SMF.

For content and explanations of the SM N2 message and the PDU session establishment or modification response message in steps S309 and S310, and a specific implementation, refer to the related descriptions of the steps in the method 200.

According to the foregoing solution, the first network element is newly added and the first service function is deployed on the user plane in an integrated manner, to improve network function deployment flexibility. A session type supporting the first service is defined, and is configured for the terminal device as the user subscription information and/or the user policy information, to reduce a change to a network. When the terminal device requests to establish/modify a session, the user plane network element supporting the first service is selected, so that the first service is subsequently activated or deployed, to reduce an unnecessary session change. Based on a trigger condition that is for executing the first service and that is configured by the session management network element, the user plane network element may execute the first service as required, thereby reflecting flexibility of dynamic deployment of the first service and saving network resources.

FIG. 4 is a schematic flowchart of a communication method 400 according to an embodiment of this application. As shown in FIG. 4, description is provided by using an example in which a session management network element is an SMF, a user plane network element is a UPF, a first network element is a service control function, and an application function is an AF. The method includes a plurality of steps below. It should be understood that the method 400 shown in FIG. 4 may be considered as a specific implementation of the method shown in FIG. 2. Related descriptions in the embodiment shown in FIG. 2 are also applicable to this implementation. FIG. 4, and FIG. 2 and FIG. 3 may have a same or similar technical means. Content described in the embodiments shown in FIG. 2 and FIG. 3 is not described in detail again in FIG. 4.

It should be noted that a solution shown in FIG. 4 is executed based on the session establishment procedure in the method 300. To be specific, a session used to transmit signaling and/or data related to a first service is established between a terminal device and a user plane. Further, in the technical solution of this application, the application function is further allowed to perform edge service deployment. For a specific implementation, refer to the following description.

S401: The AF sends an edge service deployment request message to a PCF/UDM/UDR. Correspondingly, the PCF/UDM/UDR receives the edge service deployment request message from the AF. The edge service deployment request message is used to request to deploy a second service for the terminal device at a first location. For included content and explanations of the edge service deployment request message, and specific explanation of the first location and the second service, refer to the related descriptions of step S8 in the method 200.

Based on the edge service deployment request message, the PCF/UDM/UDR needs to request the SMF to establish or change a session related to the second service for the second service, that is, establish or update a second connection used to transmit signaling and/or data related to the second service, that is, perform steps S402 to S410 below.

S402: The PCF/UDM/UDR sends a session modification request message to the SMF. Correspondingly, the SMF receives the session modification request message from the PCF/UDM/UDR.

The session modification request message may include one or more of the following: an identifier or address information of the terminal device, an identifier or address information of the AF, information about the second service, or the like. The session modification request message is used to request the SMF to modify a session.

Optionally, before changing the session, the SMF may obtain, from a service control function, execution code or a script used for executing the second service, that is, perform steps S403 to S405 below.

S403: The SMF sends a service request message #1 to a service control function. Correspondingly, the service control function receives the service request message #1 from the SMF. The service request message #1 is used to obtain the execution code or the script used for executing the second service.

S404: The service control function obtains the execution code or the script used for executing the second service.

For example, the service control function obtains, from a database DB, the execution code or the script used for executing the second service.

S405: The service control function sends a service response message #1 to the SMF. Correspondingly, the SMF receives the service response message #1 from the service control function. The service response message #1 includes service execution code or a service script used for executing the second service.

Optionally, the service control function may configure, for the UPF, the execution code or the script used for executing the second service.

For content and explanations of the service request message #1 and the service response message #1 in the foregoing steps S403 to S405, and a specific implementation, refer to the related descriptions of steps S1 to S4 in the method 200.

S406: The SMF sends configuration update information to the UPF and/or the terminal device. Correspondingly, the UPF and/or the terminal device receive/receives the configuration update information from the SMF.

The configuration update information includes an execution rule used for executing the second service, and optionally, further includes information about the second service and/or a trigger condition for executing the second service. For specific content and explanations of the trigger condition for executing the second service and the execution rule for executing the second service, and a specific implementation, refer to the related descriptions of step S9 in the method 200.

Optionally, if the UPF has not obtained, from the configuration update information, the service execution code or the service script used for executing the second service, the UPF may obtain, from the service control function, the service execution code or the service script used for executing the second service. Optionally, the UPF may autonomously activate or deploy the second service, or may request the service control function to activate or deploy the second service. This is not limited in this application. In other words, steps S407 to S409 below are performed.

S407: The UPF sends a service request message #2 to a service control function. Correspondingly, the service control function receives the FaaS service request message #2 from the UPF. The service request message #2 is used to obtain the execution code or the script used for executing the second service, or the service request message #2 is used to request the service control function to activate or deploy the second service for the terminal device at the first location.

S408: The service control function activates or deploys the second service.

S409: The service control function sends a service response message #2 to the UPF. Correspondingly, the UPF receives the service response message #2 from the service control function. The service response message #2 includes obtaining the execution code or the script used for executing the second service, or the service response message #2 indicates a deployment result of the second service, for example, successful deployment or failed deployment.

For specific implementations of steps S407 to S409, refer to related descriptions of the method 200.

S410: The SMF sends a session modification response message to the PCF/UDM/UDR. Correspondingly, the PCF/UDM/UDR receives the session modification response message from the SMF. The session update modification message may include one or more of the following: the identifier or the address information of the terminal device, the identifier or the address information of the AF, the information about the second service, or the like. The session modification response message indicates a session change result associated with the second service. It should be understood that the second service is executed based on a successful session change.

S411: The PCF/UDM/UDR sends an edge service deployment response message to the AF. Correspondingly, the AF receives the edge service deployment response message from the PCF/UDM/UDR.

The edge service deployment response message indicates a deployment result of the second service, for example, successful deployment or failed deployment. For a specific implementation, refer to the related descriptions of step S11 in the method 200.

According to the foregoing solution, the application function is supported in deploying or activating an edge service, that is, supported in deploying the second service for the terminal device at the first location, so that the terminal device can flexibly obtain the edge service (that is, the second service), thereby improving flexible deployment of the edge service.

FIG. 5 is a schematic flowchart of a communication method 500 according to an embodiment of this application. As shown in FIG. 5, description is provided by using an example in which a session management network element is an SMF, a user plane network element is a UPF (FaaS), and a first network element is a service control function. The method includes a plurality of steps below. It should be understood that the method 500 shown in FIG. 5 may be considered as a specific implementation of the method shown in FIG. 2. Related descriptions in the embodiment shown in FIG. 2 are also applicable to this implementation. FIG. 5, and FIG. 2 to FIG. 4 may have a same or similar technical means. Content described in the embodiments shown in FIG. 2 to FIG. 4 is not described in detail again in FIG. 5.

It should be noted that a solution shown in FIG. 5 is executed based on the session establishment procedure in the method 300. To be specific, a session used to transmit signaling and/or data related to a first service is established between a terminal device and a user plane. Further, when the terminal device requests a first service from the user plane network element through a first connection, the user plane network element may provide the first service for the terminal device in time. For a specific implementation, refer to the following description.

S501: A PCF/UDM/UDR sends a service request message #1 to the SMF. Correspondingly, the SMF receives the service request message #1 from the PCF/UDM/UDR. The service request message #1 is used to request to obtain the first service. The service request message #1 may carry information about the first service, or an identifier or address information of the PCF/UDM/UDR.

S502: The terminal device sends a service request message #2 to the SMF. Correspondingly, the SMF receives the service request message #2 from the terminal device.

The service request message #2 is used to request to obtain the first service. The service request message #2 may carry information about the first service, or an identifier or address information of the terminal device.

It should be noted that either or both of the foregoing steps S501 and S502 may be performed. Therefore, either or both of the following steps S509 and S510 may be correspondingly performed. This is not limited in this application.

Further, the SMF may send service activation indication information to the UPF or the service control function based on the obtained service request message, to indicate to activate or deploy the first service.

S503: The SMF sends a service activation indication to the UPF or the service control function. Correspondingly, the UPF or the service control function receives the service activation indication from the SMF. The service activation indication indicates to activate or deploy a first service.

Optionally, the terminal device may also send the service activation indication information to the UPF, to indicate to activate or deploy the first service.

S504: The terminal device sends the service activation indication to the UPF. Correspondingly, the UPF receives the service activation indication from the terminal device.

It should be understood that either of the foregoing steps S503 and S504 may be performed.

Optionally, if the SMF does not send the service activation indication to the service control function in step S503, the UPF may also request, based on the received service activation indication, the service control function to activate or deploy the first service. In other words, the following steps S505 to S507 are performed.

It should be noted that the service activation indication may be considered as an example of the trigger condition of the first service. In other words, when the trigger condition of the first service is met, the UPF or the service control function activates or deploys the first service. For specific content and explanations of the trigger condition of the first service, refer to the related descriptions of step S220 in the method 200.

S505: The UPF sends a service request message #3 to a service control function. Correspondingly, the service control function receives the service request message #3 from the UPF. The service request message #3 is used to request the service control function to activate or deploy the first service.

S506: The service control function activates or deploys the first service.

S507: The service control function sends a service response message #3 to the UPF. Correspondingly, the UPF receives the service response message #3 from the service control function. The service response message #3 indicates a deployment result of the first service, for example, successful deployment or failed deployment. For a specific implementation, refer to the related descriptions of the method 200.

Based on the foregoing implementation, the UPF or the service control function network element activates or deploys the first service.

Optionally, the UPF may immediately execute the first service after deploying or activating the first service, or may execute the first service after receiving a service request message from the terminal device. An occasion for executing the first service and an occasion for activating/deploying the first service are not specifically limited in this application.

S508: The UPF executes the first service according to an execution rule for the first service.

For example, when the trigger condition of the first service is met, the UPF executes the first service according to the execution rule for the first service. For the trigger condition of the first service, the execution rule for the first service, and a specific implementation of the first service, refer to the related descriptions of steps S220 and S260 in the method 200.

Optionally, if the UPF and the first service function are independently deployed, the UPF forwards the execution rule for the first service to the first service function, and the first service function executes the first service.

Optionally, in a process of executing the first service, the UPF or the first service function may maintain context information of the first service, or context information of the first service may be stored in a database DB.

S509: The UPF sends a service response message #2 to the terminal device. Correspondingly, the terminal device receives the service response message #2 from the UPF.

S510: The UPF sends a service response message #1 to the PCF/UDM/UDR. Correspondingly, the PCF/UDM/UDR receives the service response message #1 from the UPF. For content and explanations of the service response message #1 and the service response message #2, and a specific implementation, refer to the related descriptions of step S270 in the method 200.

According to the foregoing solution, the first network element is newly added to support activation or deployment of the first service, so that the user plane network element can provide the first service for the terminal device as required, thereby improving network function deployment flexibility.

The foregoing details the communication methods provided in this application, and the following describes communication apparatuses provided in this application.

To implement functions of the communication apparatuses in the foregoing method embodiments, the communication apparatus may include a hardware structure and/or a software module, and implement corresponding functions of the communication apparatus by using the hardware structure, the software module, or a combination of the hardware structure and the software module.

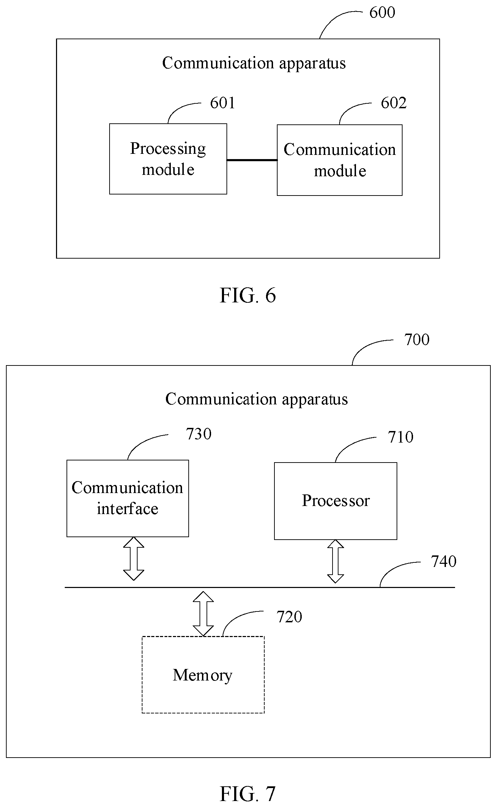

FIG. 6 is a diagram of a communication apparatus 600 according to an embodiment of this application. As shown in FIG. 6, the communication apparatus 600 includes a processing module 601 and a communication module 602. The communication apparatus 600 may be a session management network element, or may be a communication apparatus, for example, a chip, a chip system, or a circuit, that is used in a session management network element or that matches a session management network element and that can implement a method performed by the session management network element. Alternatively, the communication apparatus 600 may be a user plane network element, or may be a communication apparatus, for example, a chip, a chip system, or a circuit, that is used in a user plane network element or that matches a user plane network element and that can implement a method performed by the user plane network element. Alternatively, the communication apparatus 600 may be a first network element (for example, a service control function), or may be a communication apparatus, for example, a chip, a chip system, or a circuit, that is used in a first network element or that matches a first network element and that can implement a method performed by the first network element. Alternatively, the communication apparatus 600 may be a terminal device (for example, UE), or may be a communication apparatus, for example, a chip, a chip system, or a circuit, that is used in a terminal device or that matches a terminal device and that can implement a method performed by the terminal device.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation of the session management network element, the user plane network element, the first network element, or the terminal device in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 600 is used in the session management network element, the processing module 601 may be configured to implement a processing function of the session management network element in the foregoing embodiments, and the communication module 602 may be configured to implement receiving and sending functions of the session management network element in the foregoing embodiments.

When the communication apparatus 600 is used in the user plane network element, the processing module 601 may be configured to implement a processing function of the user plane network element in the foregoing embodiments, and the communication module 602 may be configured to implement receiving and sending functions of the user plane network element in the foregoing embodiments.

When the communication apparatus 600 is used in the first network element, the processing module 601 may be configured to implement a processing function of the first network element in the foregoing embodiments, and the communication module 602 may be configured to implement receiving and sending functions of the first network element in the foregoing embodiments.

When the communication apparatus 600 is used in a terminal device, the processing module 601 may be configured to implement a processing function of the terminal device in the foregoing embodiments, and the communication module 602 may be configured to implement receiving and sending functions of the terminal device in the foregoing embodiments.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

In this application, division into the modules is an example, and is merely logical function division. During actual implementation, there may be another division manner. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 7 is a diagram of a communication apparatus 700 according to another embodiment of this application. As shown in FIG. 7, optionally, the communication apparatus 700 may be a chip or a chip system. Optionally, the chip system in this application may include a chip, or may include a chip and another discrete device.

The communication apparatus 700 may be configured to implement a function of any network element (for example, the session management network element, the user plane network element, the first network element, or the terminal device) in the communication system described in the foregoing examples. The communication apparatus 700 may include at least one processor 710. Optionally, the processor 710 is coupled to a memory. The memory may be located in the apparatus. Alternatively, the memory may be integrated with the processor. Alternatively, the memory may be located outside the apparatus. For example, the communication apparatus 700 may further include at least one memory 720. The memory 720 stores a necessary computer program, a computer program or instructions, and/or data for implementing any one of the foregoing examples. The processor 710 may execute the computer program stored in the memory 720, to complete the method in any one of the foregoing examples.

The communication apparatus 700 may further include a communication interface 730. The communication apparatus 700 may exchange information with another device through the communication interface 730. For example, the communication interface 730 may be a transceiver, a circuit, a bus, a module, a pin, or another type of communication interface. When the communication apparatus 700 is a chip-type apparatus or circuit, the communication interface 730 in the apparatus 700 may alternatively be an input/output circuit, and may input information (or referred to as receiving information) and output information (or referred to as sending information). The processor 710 is an integrated processor, a microprocessor, an integrated circuit, a logic circuit, or the like. The processor may determine output information based on input information.

The coupling in this application is an indirect coupling or a communication connection between apparatuses, units, or modules, may be in an electrical form, a mechanical form, or another form, and is used for information exchange between the apparatuses, the units, or the modules. The processor 710 may operate cooperatively with the memory 720 and the communication interface 730. A specific connection medium between the processor 710, the memory 720, and the communication interface 730 is not limited in this application.

Optionally, as shown in FIG. 7, the processor 710, the memory 720, and the communication interface 730 are connected to each other through a bus 740. Optionally, the bus may include a type of bus such as an address bus, a data bus, or a control bus. In addition, for ease of representation, FIG. 7 shows one bus 740, but this does not mean that there is only one bus or only one type of bus.

It should be understood that the processor mentioned in this embodiment of this application may be the following device or a part of circuits configured for a processing function in the following device: a central processing unit (central processing unit, CPU) or another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) may be integrated into the processor.

It should further be noted that the memory described in this specification is intended to include, but is not limited to, these memories and any other appropriate type of memory.

An embodiment of this application further provides a computer-readable storage medium. The computer-readable storage medium stores computer instructions used to implement the method performed by the session management network element, the user plane network element, the first network element, or the terminal device in the foregoing method embodiments.

An embodiment of this application further provides a computer program product, including instructions. When the instructions are executed by a computer, the method performed by the session management network element, the user plane network element, the first network element, or the terminal device in the foregoing method embodiments is implemented.

An embodiment of this application further provides a communication system. The communication system includes the session management network element, the user plane network element, and the first network element in the foregoing embodiments. Optionally, the communication system further includes a terminal device.

For explanations and beneficial effects of related content of any one of the apparatuses provided above, refer to the corresponding method embodiments provided above. Details are not described herein again.

For ease of understanding of embodiments provided in this application, the following descriptions are provided.
(1) In this application, unless otherwise stated or there is a logic conflict, terms and/or descriptions in different embodiments are consistent and may be mutually referenced, and technical features in different embodiments may be combined based on an internal logical relationship thereof, to form a new embodiment.
(2) In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually represents an "or" relationship between associated objects. "At least one of the following items (pieces)" or a similar expression thereof means any combination of these items, including a singular item (piece) or any combination of plural items (pieces). For example, at least one item (piece) of a, b, and c may represent the following: a, b, c, a and b, a and c, b and c, or a, b and c. Each of a, b, and c may be in a singular form or a plural form.
(3) In this application, "first", "second", and various numbers (for example, #1 and #2) are merely used for distinguishing for ease of description, and are not intended to limit the scope of embodiments of this application. For example, numbers are used to distinguish between different messages but not to describe a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case but are not intended to limit time, and the device is not required to perform a determining action during implementation. This does not mean that there is another limitation.
(5) In this application, "indicating" may include directly indicating and indirectly indicating. When a piece of indication information indicates A, the indication information may directly indicate A or indirectly indicate A, but it does not indicate that the indication information definitely carries A.

Indication manners in embodiments of this application should be understood as covering various methods that can cause a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. This application does not limit, for example, a sending method.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

(6) In this application, a "protocol" may be a standard protocol in the communication field, for example, may include a 5G protocol, an NR protocol, and a related protocol used in a future communication system. This is not limited in this application. "Predefined" may include being defined in advance, for example, protocol definition. "Pre-configured" may be implemented by pre-storing corresponding code or a corresponding table in a device, or may be implemented in another manner that may indicate related information. A specific implementation thereof is not limited in this application.

(7) In this application, "communication" may also be described as "data transmission", "information transmission", "data processing", or the like. "Transmission" includes "sending" and "receiving".

Sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be at one location, or may be distributed on a plurality of network units. A part or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first request message from a terminal device, wherein the first request message is used to request to establish a first connection for a first service, and the first connection is used to transmit signaling and/or data associated with the first service; and
sending configuration information to a user plane network element, wherein the configuration information is used to establish the first connection between the terminal device and the user plane network element, the configuration information comprises a first execution rule for the first service, the first execution rule is used for executing the first service, and the user plane network element supports providing the first service for the terminal device.

2. The method according to claim 1, wherein the method further comprises:
sending a first response message to the terminal device, wherein the first response message indicates an establishment result of the first connection.

3. The method according to claim 2, wherein the first response message comprises a second execution rule for the first service, and the second execution rule is determined based on policy information and/or subscription information.

4. The method according to any one of claims 1 to 3, wherein the configuration information further comprises a trigger condition of the first service and/or information about the first service.

5. The method according to any one of claims 1 to 4, wherein the first execution rule comprises one or more of the following:
a transmission quality of service QoS enforcement rule;
a data encryption method;
an address mapping rule;
a network resource occupied for executing the first service;
an application programming interface API of the first service;
time information for allowing provision of the first service;
location information for allowing provision of the first service;
information about an application APP that supports use of the first service; and
quality of service for allowing provision of the first service.

6. The method according to any one of claims 1 to 5, wherein before sending the configuration information to the user plane network element, the method further comprises:
determining the user plane network element based on the obtained policy information and/or subscription information.

7. The method according to any one of claims 1 to 6, wherein the method further comprises:
sending a second request message to a first network element, wherein the second request message is used to request the first network element to configure a first parameter for the user plane network element, the first parameter comprises address information of a second network element and/or resource information used for executing the first service, the address information of the second network element is used for the user plane network element to establish a connection with the second network element, and the first network element and the second network element support the first service; and
receiving a second response message from the first network element, wherein the second response message indicates a configuration result of the first parameter.

8. The method according to any one of claims 1 to 7, wherein the method further comprises:
sending a first query message to the first network element, wherein the first query message is used to obtain the resource information used for executing the first service, and the first network element supports the first service;
receiving, from the first network element, the resource information used for executing the first service or information about a database, wherein the database stores the resource information used for executing the first service; and
sending, to the user plane network element, the resource information used for executing the first service or the information about the database.

9. The method according to any one of claims 1 to 8, wherein the method further comprises:
receiving a third request message, wherein the third request message is used by an application network element to request to deploy a second service for the terminal device at a first location; and
sending configuration update information to the user plane network element and/or the terminal device, wherein the configuration update information comprises resource information used for deploying the second service.

10. The method according to claim 9, wherein the third request message comprises the resource information used for deploying the second service.

11. The method according to claim 9 or 10, wherein the method further comprises:
sending a second query message to the first network element, wherein the second query message is used to obtain the resource information used for deploying the second service, and the first network element supports the first service; and
receiving, from the first network element, the resource information used for deploying the second service or information about a database, wherein the database stores the resource information used for deploying the second service.

12. The method according to any one of claims 1 to 11, wherein the method further comprises:
receiving a service request message from the terminal device, wherein the service request message is used to request to execute the first service;
sending activation indication information to the user plane network element or the first network element, wherein the activation indication information indicates to activate the first service, and the first network element supports the first service; and
sending a service response message to the terminal device, wherein the service response message indicates an execution result of the first service.

13. A communication method, comprising:
receiving configuration information from a session management network element, wherein the configuration information is used to establish a first connection between a terminal device and a user plane network element, the first connection is used to transmit signaling and/or data associated with a first service, and the user plane network element supports the first service; and
establishing, based on the configuration information, the first connection with the terminal device for the first service.

14. The method according to claim 13, wherein the configuration information comprises a first execution rule for the first service, and the method further comprises:
executing the first service according to the first execution rule for the first service; and
sending an execution result of the first service to the terminal device through the first connection.

15. The method according to claim 14, wherein the configuration information further comprises a trigger condition of the first service, and executing the first service according to the first execution rule for the first service comprises:
executing the first service according to the first execution rule when the trigger condition of the first service is met.

16. The method according to claim 14 or 15, wherein the first execution rule comprises one or more of the following:
a transmission quality of service QoS enforcement rule;
a data encryption method;
an address mapping rule;
a network resource occupied for executing the first service;
an application programming interface API of the first service;
time information for allowing provision of the first service;
location information for allowing provision of the first service;
information about an application APP that supports use of the first service; and
quality of service for allowing provision of the first service.

17. The method according to claim 15 or 16, wherein the trigger condition of the first service comprises one or more of the following:
receiving activation indication information from the session management network element, wherein the activation indication information is used to activate the first service; or
receiving activation indication information from the terminal device through the first connection, wherein the activation indication information is used to activate the first service; or
receiving a service request message from the terminal device through the first connection.

18. The method according to any one of claims 13 to 17, wherein the method further comprises:
obtaining address information of a second network element, wherein the second network element supports providing the first service for the terminal device; and
establishing a second connection with the second network element based on the address information of the second network element.

19. The method according to claim 18, wherein obtaining the address information of the second network element comprises:
receiving the address information of the second network element from a first network element or the session management network element, wherein the first network element supports the first service.

20. The method according to claim 18, wherein obtaining the address information of the second network element comprises:
before receiving the address information of the second network element from the first network element, sending a third query message to the first network element, wherein the third query message is used to obtain the address information of the second network element.

21. The method according to any one of claims 13 to 20, wherein the method further comprises:
receiving, from the first network element or the session management network element, resource information used for executing the first service or information about a database, wherein the first network element supports the first service; and
querying the database to obtain the resource information.

22. The method according to claim 21, wherein before receiving, from the first network element, the resource information used for executing the first service or the information about the database, the method further comprises:
sending a fourth query message to the first network element, wherein the fourth query message is used to obtain the resource information used for executing the first service.

23. The method according to any one of claims 13 to 22, wherein the method further comprises:
receiving configuration update information from the session management network element, wherein the configuration update information comprises resource information used for deploying a second service, and the second service is a service that an application network element requests to deploy for the terminal device at a first location; and
updating, based on the configuration update information, the resource information used for deploying the second service.

24. A communication method, comprising:
receiving a second request message from a session management network element, wherein the second request message is used to request a first network element to configure a first parameter for a user plane network element, the first parameter comprises address information of a second network element and/or resource information used for executing a first service, the address information of the second network element is used for the user plane network element to establish a connection with the second network element, and the first network element and the second network element support the first service;
sending the first parameter to the user plane network element; and
sending a second response message to the session management network element, wherein the second response message indicates a configuration result of the first parameter.

25. The method according to claim 24, wherein the method further comprises:
sending the address information of the second network element to the user plane network element.

26. The method according to claim 24 or 25, wherein the method further comprises:
sending, to the user plane network element and/or the session management network element, resource information used for executing the first service or information about a database, wherein the database stores the resource information used for executing the first service.

27. A communication method, comprising:
sending a first request message to a session management network element, wherein the first request message is used to request to establish a first connection for a first service, the first connection is used to transmit signaling and/or data associated with the first service, the first connection is a connection between a terminal device and a user plane network element, and the user plane network element supports the first service; and
receiving a first response message from the session management network element, wherein the first response message indicates an establishment result of the first connection.

28. The method according to claim 27, wherein the method further comprises:
sending a trigger condition of the first service to the user plane network element through the first connection.

29. The method according to claim 27 or 28, wherein the method further comprises:
sending a service request message to the user plane network element, wherein the service request message is used to request to execute the first service, and the service request message comprises an identifier of the first service; and
receiving a service response message from the user plane network element, wherein the service response message comprises an execution result of the first service.

30. The method according to any one of claims 27 to 29, wherein the method further comprises:
receiving configuration update information from the session management network element, wherein the configuration update information comprises resource information used for deploying a second service, and the second service is a service that an application network element requests to deploy for the terminal device at a first location; and
updating, based on the configuration update information, the resource information used for deploying the second service.

31. A communication method, comprising:
sending, by a session management network element, configuration information to a user plane network element, and receiving, by the user plane network element, the configuration information from the session management network element, wherein the configuration information is used to establish a first connection between a terminal device and the user plane network element, the first connection is used to transmit signaling and/or data associated with a first service, the configuration information comprises a first execution rule for the first service, the first execution rule is used for executing the first service, and the user plane network element supports providing the first service for the terminal device; and
establishing, by the user plane network element based on the configuration information, the first connection with the terminal device for the first service.

32. The method according to claim 31, wherein before sending, by the session management network element, the configuration information to the user plane network element, the method further comprises:
receiving, by the session management network element, a first request message from the terminal device, wherein the first request message is used to request to establish the first connection for the first service.

33. The method according to claim 32, wherein the method further comprises:
sending, by the session management network element, a first response message to the terminal device, and receiving, by the terminal device, the first response message from the session management network element, wherein the first response message indicates an establishment result of the first connection.

34. The method according to claim 33, wherein the first response message comprises a second execution rule for the first service, and the second execution rule is determined based on policy information and/or subscription information.

35. The method according to any one of claims 31 to 34, wherein the method further comprises:
sending, by the session management network element, a second request message to a first network element, and receiving, by the first network element, the second request message from the session management network element, wherein the second request message is used to request the first network element to configure a first parameter for the user plane network element, the first parameter comprises address information of a second network element and/or resource information used for executing the first service, the address information of the second network element is used for the user plane network element to establish a connection with the second network element, and the first network element and the second network element support the first service;
sending, by the first network element, the first parameter to the user plane network element; and
sending, by the first network element, a second response message to the session management network element, and receiving, by the session management network element, the second response message from the first network element, wherein the second response message indicates a configuration result of the first parameter.

36. The method according to any one of claims 31 to 35, wherein the configuration information further comprises a trigger condition of the first service and/or information about the first service.

37. The method according to any one of claims 31 to 36, wherein the method further comprises:
executing, by the user plane network element, the first service according to the first execution rule for the first service; and
sending, by the user plane network element, an execution result of the first service to the terminal device through the first connection, and receiving, by the terminal device, the execution result of the first service from the user plane network element through the first connection.

38. The method according to claim 37, wherein executing, by the user plane network element, the first service according to the first execution rule for the first service comprises:
executing, by the user plane network element, the first service according to the first execution rule when the trigger condition of the first service is met.

39. The method according to claim 37 or 38, wherein the trigger condition of the first service comprises one or more of the following:
receiving, by the user plane network element, activation indication information from the session management network element, wherein the activation indication information is used to activate the first service; or
receiving, by the user plane network element, activation indication information from the terminal device through the first connection, wherein the activation indication information is used to activate the first service; or
receiving, by the user plane network element, a service request message from the terminal device through the first connection.

40. The method according to any one of claims 31 to 39, wherein the method further comprises:
obtaining, by the user plane network element, address information of a second network element, wherein the second network element supports providing the first service for the terminal device; and
establishing, by the user plane network element, a second connection with the second network element based on the address information of the second network element.

41. The method according to claim 40, wherein obtaining, by the user plane network element, the address information of the second network element comprises:
sending, by the first network element or the session management network element, the address information of the second network element to the user plane network element, and receiving, by the user plane network element, the address information of the second network element from the first network element or the session management network element.

42. The method according to claim 41, wherein obtaining, by the user plane network element, the address information of the second network element comprises:
before the user plane network element receives the address information of the second network element from the first network element, sending, by the user plane network element, a third query message to the first network element, wherein the first network element receives the third query message from the user plane network element, and the third query message is used to obtain the address information of the second network element.

43. The method according to any one of claims 31 to 42, wherein the first execution rule comprises one or more of the following:
a transmission quality of service QoS enforcement rule;
a data encryption method;
an address mapping rule;
a network resource occupied for executing the first service;
an application programming interface API of the first service;
time information for allowing provision of the first service;
location information for allowing provision of the first service;
information about an application APP that supports use of the first service; and
quality of service for allowing provision of the first service.

44. The method according to any one of claims 31 to 43, wherein before sending, by the session management network element, the configuration information to the user plane network element, the method further comprises:
determining, by the session management network element, the user plane network element based on the obtained policy information and/or subscription information.

45. The method according to any one of claims 31 to 44, wherein the method further comprises:
sending, by the session management network element, a first query message to the first network element, and receiving, by the first network element, the first query message from the session management network element, wherein the first query message is used to obtain resource information used for executing the first service;
sending, by the first network element to the session management network element, the resource information used for executing the first service or information about a database, and receiving, by the session management network element from the first network element, the resource information used for executing the first service or the information about the database, wherein the database stores the resource information used for executing the first service; and
sending, by the session management network element to the user plane network element, the resource information used for executing the first service or the information about the database, and receiving, by the user plane network element, the resource information used for executing the first service or the information about the database from the session management network element.

46. The method according to any one of claims 31 to 45, wherein the method further comprises:
receiving, by the user plane network element from the first network element or the session management network element, the resource information used for executing the first service or the information about the database, wherein the first network element supports the first service; and
querying, by the user plane network element, the database to obtain the resource information.

47. The method according to claim 46, wherein before receiving, from the first network element, the resource information used for executing the first service or the information about the database, the method further comprises:
sending, by the user plane network element, a fourth query message to the first network element, and receiving, by the first network element, the fourth query message from the user plane network element, wherein the fourth query message is used to obtain the resource information used for executing the first service.

48. The method according to any one of claims 31 to 47, wherein the method further comprises:
receiving, by the session management network element, a third request message, wherein the third request message is used by an application network element to request to deploy a second service for the terminal device at a first location; and
sending, by the session management network element, configuration update information to the user plane network element and/or the terminal device, and receiving, by the user plane network element and/or the terminal device, the configuration update information from the session management network element, wherein the configuration update information comprises resource information used for deploying the second service.

49. The method according to claim 48, wherein the third request message comprises the resource information used for deploying the second service.

50. The method according to claim 48 or 49, wherein the method further comprises:
sending, by the session management network element, a second query message to the first network element, and receiving, by the first network element, the second query message from the session management network element, wherein the second query message is used to obtain the resource information used for deploying the second service; and
sending, by the first network element to the session management network element, the resource information used for deploying the second service or information about a database, and receiving, by the session management network element from the first network element, the resource information used for deploying the second service or the information about the database, wherein the database stores the resource information used for deploying the second service.

51. The method according to any one of claims 31 to 50, wherein the method further comprises:
sending, by the terminal device, a service request message to the session management network element, and receiving, by the session management network element, the service request message from the terminal device, wherein the service request message is used to request to execute the first service;
sending, by the session management network element, activation indication information to the user plane network element or the first network element, and receiving, by the user plane network element or the first network element, the activation indication information from the session management network element, wherein the activation indication information indicates to activate the first service; and
sending, by the session management network element, a service response message to the terminal device, and receiving, by the terminal device, the service response message from the session management network element, wherein the service response message indicates an execution result of the first service.

52. The method according to any one of claims 31 to 51, wherein the method further comprises:
receiving, by the first network element or the terminal device, configuration update information from the session management network element, wherein the configuration update information comprises resource information used for deploying a second service, and the second service is a service that an application network element requests to deploy for the terminal device at a first location; and
updating, by the first network element or the terminal device based on the configuration update information, the resource information used for deploying the second service.

53. A communication apparatus, comprising one or more functional modules, wherein the one or more functional modules are configured to perform the method according to any one of claims 1 to 12, the one or more functional modules are configured to perform the method according to any one of claims 13 to 23, the one or more functional modules are configured to perform the method according to any one of claims 24 to 26, or the one or more functional modules are configured to perform the method according to any one of claims 27 to 30.

54. A communication apparatus, comprising at least one processor, wherein the at least one processor is configured to execute a computer program or instructions, to perform the method according to any one of claims 1 to 12, the method according to any one of claims 13 to 23, the method according to any one of claims 24 to 26, or the method according to any one of claims 27 to 30.

55. A communication system, comprising a session management network element, a user plane network element, and a first network element, wherein the session management network element is configured to perform the method according to any one of claims 1 to 12, the user plane network element is configured to perform the method according to any one of claims 13 to 23, and the first network element is configured to perform the method according to any one of claims 24 to 26.

56. The communication system according to claim 34, further comprising a terminal device, wherein the terminal device is configured to perform the method according to any one of claims 27 to 30.

57. A computer-readable storage medium, comprising: wherein the computer-readable storage medium stores a computer program; and when the computer program is run on a computer, the computer is enabled to perform the method according to any one of claims 1 to 12, the computer is enabled to perform the method according to any one of claims 13 to 23, the computer is enabled to perform the method according to any one of claims 24 to 26, or the computer is enabled to perform the method according to any one of claims 27 to 30.

58. A computer program product, comprising: wherein when the computer program product is run on a computer, the computer is enabled to perform the method according to any one of claims 1 to 12, the computer is enabled to perform the method according to any one of claims 13 to 23, the computer is enabled to perform the method according to any one of claims 24 to 26, or the computer is enabled to perform the method according to any one of claims 27 to 30.
